# EUROPÄISCHE PATENTSCHRIFT

(11) **EP 4 124 593 B1**
(45) Veröffentlichungstag und Bekanntmachung des Hinweises auf die Patenterteilung: **25.02.2026**
(21) Anmeldenummer: 21188862.3
(22) Anmeldetag: 30.07.2021
(51) Int. Cl.: B65G 21/20, B65G 27/04, B65G 47/24, B65G 47/71

(54) **BLISTERMASCHINE UND VERFAHREN ZUM FÖRDERN VON SCHÜTTGUT**
BLISTER MACHINE AND METHOD FOR CONVEYING PIECE GOODS
MACHINE DE CONDITIONNEMENT SOUS BLISTER ET PROCÉDÉ DE TRANSPORT DU PRODUIT EN VRAC

(43) Veröffentlichungstag der Anmeldung: 01.02.2023
(73) Patentinhaber: Uhlmann Pac-Systeme GmbH & Co. KG, 88471 Laupheim (DE)
(72) Erfinder: Sackmaier, Steffen, 01067 Dresden (DE); Binder, Sebastian, 88477 Schwendi (DE)
(74) Vertreter: Wächter, Jochen

(56) Entgegenhaltungen:
- AT-B- 323 058
- JP-A- S52 155 768
- US-A1- 2011 056 797

## Beschreibung

Die vorliegende Erfindung betrifft eine Blistermaschine und ein Verfahren zum Fördern von Schüttgut umfassend eine Vielzahl von Produkten, insbesondere von medizinischen oder pharmazeutischen Produkten, und Produktbruch derselben.

In Form von Schüttgut vorliegende Produkte können zum Beispiel medizinische oder pharmazeutische Produkte, Nahrungs- und Nahrungsergänzungsmittel sein. In Verpackungsmaschinen zum Verpacken solcher Produkte werden die Produkte mittels einer Fördervorrichtung einer Fülleinrichtung zugeführt, die die Produkte in entsprechende Verpackungen füllt. Beispielhaft seien Blistermaschinen zum Verpacken der Produkte in Blisterpackungen oder Flaschenlinie zum Verpacken der Produkte in flaschenähnlichen Behältern genannt.

Liegen die Produkte in Form von Schüttgut vor, enthält dieses neben im Wesentlichen unbeschädigten Produkten häufig auch während der Herstellung, des Transports oder des Befüllens der Fördervorrichtung beschädigte Produkte, sogenannten Produktbruch. Gelangt Produktbruch in die Verpackungen, bilden entsprechende Verpackungen in der Regel Ausschuss und werden ausgeschleust und vernichtet. Dadurch wird die Ausbringung der Verpackungsmaschine reduziert und Kosten durch Materialverbrauch und Entsorgung erzeugt. Zudem kann Produktbruch zu Störungen in der Fördervorrichtung, der Fülleinrichtung und gegebenenfalls weiteren Bearbeitungsstationen führen.

Um dies zu vermeiden, sind Kontrollsysteme bekannt, die Produktbruch bereits vor dem Befüllen der Verpackungen erkennen und abscheiden. Solche Kontrollsysteme können Kamerasysteme zum Erkennen von Produktbruch umfassen, wobei mechanische Ausschleuseeinrichtungen oder Absaugeinrichtungen den erkannten Produktbruch von den Produkten abscheiden. Solche Systeme sind jedoch teuer und erfordern verhältnismäßig viel Bauraum.

Eine kostengünstigere Möglichkeit stellen sogenannte Lochbleche dar, die eine Vielzahl von Löchern aufweisen, über die in Form von Schüttgut vorliegende Produkte gefördert werden. Produktbruch soll dabei durch die Löcher fallen und abgeschieden werden. Ein zuverlässiges Abscheiden ist bei Lochblechen jedoch in der Regel nur für sehr kleine Bruchstücke und bestimmte Produktformen zu erreichen.

Die AT 323 058 B offenbart eine Maschine mit einem Produktspeicher zur Aufnahme von Schüttgut umfassend eine Vielzahl von Produkten und Produktbruch derselben und einer Fördervorrichtung zum Fördern des Schüttguts in einer Förderrichtung und zum Abscheiden von Produktbruch. Der Produktspeicher ist zur Abgabe des Schüttguts an die Fördervorrichtung eingerichtet, die ein erstes Förderelement mit einer ersten Förderfläche, auf der das Schüttgut in Förderrichtung förderbar ist, sowie ein zweites Förderelement mit einer zweiten Förderfläche, auf der das Schüttgut weiter in Förderrichtung förderbar ist, umfasst. Das zweite Förderelement ist dem ersten Förderelement in Förderrichtung nachgeschaltet. Das erste und das zweite Förderelement in Förderrichtung sind beabstandet zueinander angeordnet, sodass ein Spalt zwischen dem ersten und dem zweiten Förderelement ausgebildet ist.

Es ist eine Aufgabe der vorliegenden Erfindung, eine Blistermaschine und ein Verfahren zum Fördern von Schüttgut umfassend eine Vielzahl von Produkten und Produktbruch derselben bereitzustellen, die ein zuverlässiges Abscheiden von Produktbruch und zugleich eine hohe Ausbringung ermöglichen.

Diese Aufgabe wird durch den Gegenstand der Ansprüche 1 und 9 gelöst. Vorteilhafte Ausführungsformen sind Gegenstand der abhängigen Ansprüche.

Eine erfindungsgemäße Blistermaschine umfasst einen Produktspeicher zur Aufnahme von Schüttgut umfassend eine Vielzahl von Produkten und Produktbruch derselben, eine Fördervorrichtung zum Fördern des Schüttguts in einer Förderrichtung (F) und zum Abscheiden von Produktbruch und eine Füllstation zum Füllen der Produkte in Näpfe, wobei der Produktspeicher zur Abgabe des Schüttguts an die Fördervorrichtung eingerichtet ist. Die Fördervorrichtung ist zum Fördern der Produkte zur Füllstation eingerichtet, wobei die Fördervorrichtung ein erstes Förderelement mit einer ersten Förderfläche, auf der das Schüttgut in Förderrichtung förderbar ist, ein zweites Förderelement mit einer zweiten Förderfläche, auf der das Schüttgut weiter in Förderrichtung förderbar ist, wobei das zweite Förderelement dem ersten Förderelement in Förderrichtung nachgeschaltet ist, und ein Abdeckelement mit einer Abdeckfläche umfasst, die im Wesentlichen parallel zur ersten Förderfläche und zur zweiten Förderfläche angeordnet und diesen zugewandt ist, um zumindest einen Förderkanal für das Schüttgut zwischen der ersten Förderfläche, der zweiten Förderfläche und der Abdeckfläche zu bilden. Das erste und das zweite Förderelement sind in Förderrichtung beabstandet zueinander angeordnet, sodass ein Spalt zwischen dem ersten und dem zweiten Förderelement ausgebildet ist, wobei das Abdeckelement über dem Spalt sowie über jeweils einem Abschnitt des ersten und des zweiten Förderelements angeordnet ist, die an den Spalt angrenzen. Der Spalt weist in einer ersten Stellung des ersten und des zweiten Förderelements in Förderrichtung eine erste Breite gemäß einem vordefinierten Abscheidekriterium auf derart, dass der Durchtritt von Produktbruch durch den Spalt ermöglicht und der Durchtritt von Produkten durch den Spalt unterbunden ist.

Der Spalt ist folglich derart ausgebildet, dass Produktbruch durch den Spalt hindurch fällt, während Produkte über den Spalt hinweg bewegt werden. Auf diese Art und Weise wird Produktbruch automatisch und zuverlässig abgeschieden, während Produkte ohne wesentliche Beeinflussung der Ausbringung weiter gefördert werden. Produktbruch gelangt folglich nicht in die Verpackungen, sodass eine diesbezügliche Kontrolle und Ausschleusung mangelhafter Verpackungen unterbleiben kann. Durch die Bildung des Förderkanals zwischen dem Abdeckelement sowie dem ersten und dem zweiten Förderelement und der dadurch bedingten Begrenzung des Förderkanals nach oben durch die Abdeckfläche kann eine Ausrichtung der Produkte im Bereich des Spalts zumindest teilweise beeinflusst werden und ein zuverlässiges Abscheiden des Produktbruchs durch den Spalt erreicht werden.

Bei den Produkten des Schüttguts handelt es sich bevorzugt um medizinische oder pharmazeutische Produkte. Die medizinischen oder pharmazeutischen Produkte können als Solida beispielsweise in Form von Tabletten, Kapseln, Dragees, Oblongs, etc. vorliegen. Bei den Produkten des Schüttguts kann es sich auch um Nahrungs- oder Nahrungsergänzungsmittel handeln, wie zum Beispiel Kaugummis, Pastillen, Bonbons oder dergleichen sowie um Mineralien, Vitamine, Fettsäuren oder dergleichen in Tabletten- oder Kapselform.

Als "Produkte" werden hierin Produkte bezeichnet, die im Wesentlichen unversehrt sind. "Produktbruch" bezeichnet im Gegensatz dazu beschädigte Produkte, die also nicht mehr im Wesentlichen unversehrt sind. Die Unterscheidung zwischen Produkten und Produktbruch erfolgt anhand des vordefinierten Abscheidekriteriums. Das Abscheidekriterium ist abhängig von der Produktgröße. Es kann sich für verschiedene Produktarten unterscheiden. So kann es aufgrund der genau spezifizierten Dosierung eines in medizinischen und pharmazeutischen Produkten enthaltenen Wirkstoffs erforderlich sein, dass ausschließlich vollständig unbeschädigte Produkte verpackt und bereits minimal beschädigte Produkte abgeschieden werden. Hingegen kann es bei Nahrungsmitteln, wie Kaugummis oder Bonbons, bei denen in erster Linie der Genuss im Mittelpunkt steht, ausreichen, nur stark beschädigte Produkte abzuscheiden und die Produkte im Übrigen zu verpacken.

Die Abhängigkeit des Abscheidekriteriums von der Produktgröße und dem Produktzustand wird anhand des folgenden Beispiels deutlich. Vollständig unversehrte Produkte weisen eine vorbestimmte Dimension auf, wie z. B. einen Durchmesser oder eine Länge L1 auf. Beschädigte Produkte weisen einen kleineren Durchmesser oder eine kleinere Länge auf. Es kann nun festgelegt sein, dass geringfügig beschädigte Produkte mit einem Durchmesser bzw. einer Länge L2 größer 90 % von L1 noch als "Gutprodukte" zählen und Produkte mit einem Durchmesser bzw. einer Länge L3 kleiner oder gleich 90 % von L1 als "Schlechtprodukte" zählen und somit Produktbruch darstellen, der abzuscheiden ist. Für eine andere Produktart könnte die Unterscheidung auch erst bei 60 % der Länge L1 oder bereits bei 95 % der Länge L1 erfolgen.

Die erste Breite des Spalts ist nun gemäß diesem vordefinierten Abscheidekriterium derart gewählt, dass Produktbruch zuverlässig durch den Spalt abgeschieden wird und Produkte möglichst ungehindert über den Spalt hinweg bewegt werden. Der Spalt weist folglich die erste Breite auf derart, dass der Durchtritt von Produktbruch durch den Spalt gewährleistet ist. Mit anderen Worten ist der Spalt mit der ersten Breite derart ausgebildet, dass Produktbruch zuverlässig durch den Spalt abgeschieden wird, also ein Bewegen von Produktbruch über den Spalt hinweg unterbunden ist. So wird sichergestellt, dass kein Produktbruch auf das zweite Förderelement gelangt und somit der weiteren Verarbeitung zugeführt wird.

Insbesondere erfolgt der Durchtritt des Produktbruchs durch den Spalt durch freien Fall des Produktbruchs durch den Spalt und somit ohne zusätzliche Ablenkmittel, wie zum Beispiel Klappen, Schieber, Luftdüsen oder dergleichen, die den Produktbruch gezielt erfassen und abführen. Ebenso bewegen sich die Produkte über den freien Spalt hinweg und somit ohne Unterstützung zusätzlicher Stütz- oder Ablenkmittel, die den Spalt temporär verschließen oder blockieren könnten. Unter dem Spalt kann ein Auffangbehälter zum Auffangen des Produktbruchs vorgesehen sein.

Der Spalt erstreckt sich bevorzugt über die gesamte Breite der ersten und der zweiten Förderfläche. Die Breite der ersten und der zweiten Förderfläche ist senkrecht zur Förderrichtung und, bei im Wesentlichen ebenen Förderflächen, in einer Ebene mit der ersten und der zweiten Förderfläche definiert.

Es ist weiterhin bevorzugt, dass die erste und die zweite Förderfläche im Wesentlichen in einer Ebene angeordnet sind. Dadurch kann das Risiko verringert werden, dass Produkte beim Übergang von der ersten auf die zweite Förderfläche kippen und sich zwischen dem ersten und dem zweiten Förderelement und dem Abdeckelement verklemmen.

Ein Abstand der Abdeckfläche zur ersten bzw. zur zweiten Förderfläche in einer Richtung senkrecht zur Abdeckfläche definiert eine Höhe des zumindest einen Förderkanals. Die Höhe des zumindest einen Förderkanals ist vorzugsweise in Abhängigkeit von der Produktgröße und gegebenenfalls von der Produktgeometrie definiert. Zum Beispiel kann der zumindest eine Förderkanal eine Höhe aufweisen, die kleiner ist als zwei übereinander auf der ersten bzw. zweiten Förderfläche angeordnete Produkte, sodass das Schüttgut nur einlagig in den zumindest einen Förderkanal eintreten kann. Weisen die Produkte in verschiedenen Richtungen unterschiedliche Dimensionen auf, kann die Höhe des zumindest einen Förderkanals auch derart gewählt sein, dass die Produkte nur in einer bestimmten Ausrichtung in den Förderkanal eintreten können bzw. Produkte in einer bestimmten Ausrichtung nicht in den Förderkanal eintreten können.

Um Verklemmungen von Produkten am bzw. im Spalt zu vermeiden und ein möglichst ungehindertes Bewegen der Produkte über den Spalt zu ermöglichen, weist der zumindest eine Förderkanal bevorzugt eine Höhe auf, die ein Kippen der Produkte über einen den Spalt begrenzenden Rand des ersten Förderelements verhindert. Vorzugsweise beträgt die Höhe des zumindest einen Förderkanals daher zwischen dem 1,0- und dem 1,5-fachen, mehr bevorzugt zwischen dem 1,05- und dem 1,4-fachen, noch mehr bevorzugt zwischen dem 1,1- und dem 1,2-fachen der Höhe der Produkte senkrecht zur ersten bzw. zweiten Förderfläche. Insbesondere weist der zumindest eine Förderkanal eine Höhe auf, die kleiner ist als eine Länge der Produkte in Förderrichtung. Auf diese Weise kann durch geeignete Ausbildung des Spalts und des zumindest einen Förderkanals für eine möglichst zuverlässige Bewegung der Produkte über den Spalt gesorgt werden, was die Ausbringung der Fördervorrichtung erhöht.

Das Abdeckelement ist vorzugsweise am ersten und/oder am zweiten Förderelement festgelegt. D. h., dass das Abdeckelement stets in einem festen Abstand zur ersten bzw. zweiten Förderfläche angeordnet ist, wodurch sichergestellt werden kann, dass die vordefinierte Höhe des zumindest einen Förderkanals jederzeit beibehalten wird. Insbesondere ist das Abdeckelement nicht relativ zu demjenigen aus erstem und zweitem Förderelement bewegbar, an dem es festgelegt ist. Um einen Zugriff auf den Spalt zu ermöglichen, kann das Abdeckelement jedoch lösbar mit dem jeweiligen aus dem ersten und dem zweiten Förderelement verbunden sein.

Das erste und das zweite Förderelement sind vorzugsweise plattenförmig ausgebildet. Jedes Förderelement kann dann eine im Wesentlichen rechteckige Platte sein, beispielsweise aus Metall oder Kunststoff. Eine Oberseite des ersten und des zweiten Förderelements umfasst die erste bzw. die zweite Förderfläche. Das Schüttgut wird auf der ersten und der zweiten Förderfläche relativ zum ersten bzw. Förderelement bewegt, bspw. durch Schwingungen der Förderelemente. Das erste und das zweite Förderelement umfassen insbesondere keine Förderbänder oder sonstige bewegliche Fördermittel zum Transport von Produkten, bei denen sich die Produkte in der Regel nicht in Förderrichtung relativ zu den Förderflächen bewegen. So können das erste und das zweite Förderelement möglichst einfach ausgebildet sein.

Bei der Fördervorrichtung handelt es sich bevorzugt um einen Vibrationsförderer, beispielsweise in Form einer Vibrationsrinne, wie zur Förderung von Schüttgut, insbesondere von medizinischen und pharmazeutischen Produkten bekannt. Das erste und das zweite Förderelement bilden dann Teil der Vibrationsrinne.

Die Fördervorrichtung kann eine Antriebseinrichtung umfassen, die mit dem ersten oder dem zweiten Förderelement gekoppelt ist, um diese in Schwingung zu versetzen. Vorzugsweise ist die Antriebseinrichtung mit dem ersten Förderelement gekoppelt und das erste und das zweite Förderelement sind zur Übertragung der Schwingungen miteinander verbunden.

Im Allgemeinen ist es bevorzugt, dass das erste und das zweite Förderelement als getrennte Komponenten ausgebildet sind. Sie können miteinander verbunden sein. Insbesondere können das erste und das zweite Förderelement beweglich miteinander verbunden sein zum Beispiel derart, dass das erste und das zweite Förderelement parallel zur Förderrichtung relativ zueinander bewegbar sind.

In einer besonders bevorzugten Ausführungsform der vorliegenden Erfindung sind das erste und/oder das zweite Förderelement in Förderrichtung relativ zueinander bewegbar und die Breite des Spalts ist einstellbar. Insbesondere sind das erste und/oder das zweite Förderelement ausschließlich in Förderrichtung relativ zueinander bewegbar. Die erste und die zweite Förderfläche bleiben dann im Wesentlichen in einer Ebene angeordnet, während die Breite des Spalts einstellbar ist. Durch die Einstellbarkeit des Spalts kann die Fördervorrichtung besonders einfach an das vordefinierte Abscheidekriterium sowie unterschiedliche Produktgrößen und -geometrien angepasst werden.

Dass das erste und/oder das zweite Förderelement relativ zueinander bewegbar sind, kann dadurch erreicht werden, dass nur eines der beiden Förderelemente relativ zum anderen Förderelement bewegbar ist. Vorzugsweise ist das zweite Förderelement relativ zum ersten Förderelement hin- und her bewegbar, während das erste Förderelement bezüglich des zweiten Förderelements nicht bewegbar ist. Es können aber auch beide Förderelemente bewegbar sein.

Die Fördervorrichtung kann hierzu zumindest einen Stellantrieb umfassen, der das erste und das zweite Förderelement relativ zueinander bewegt. Bei dem Stellantrieb kann es sich beispielsweise um einen hydraulischen, pneumatischen, elektrischen oder mechanischen Linearantrieb handeln. Bevorzugt ist ein ortfester Bestandteil des zumindest einen Stellantriebs mit dem ersten Förderelement verbunden und ein beweglicher Bestandteil des zumindest einen Stellantriebs ist mit dem zweiten Förderelement verbunden.

Um gegebenenfalls im Bereich des Spalts verklemmte Produkte zu lösen, ist es weiterhin bevorzugt, dass das erste und das zweite Förderelement in Förderrichtung zwischen der ersten Stellung und einer zweiten Stellung relativ zueinander bewegbar sind, wobei der Spalt in der zweiten Stellung eine zweite Breite aufweist, die größer als die erste Breite ist. Weist der Spalt die zweite Breite auf, ist der Durchtritt von Produkten durch den Spalt ermöglicht. Im Bereich des Spalts verklemmte Produkte fallen folglich durch den Spalt hindurch, wodurch die Verklemmung gelöst wird. Eine möglichst zuverlässige Lösung von Verklemmungen kann erreicht werden, wenn die zweite Breite größer als eine maximale Dimension der Produkte in Förderrichtung ist.

Die Fördervorrichtung kann dazu eingerichtet sein, das erste und das zweite Förderelement in vordefinierten zeitlichen Abständen von der ersten Stellung in die zweite Stellung zu bewegen, für eine vordefinierte Dauer in der zweiten Stellung zu belassen, und dann zurück in die erste Stellung zu bewegen. Möglicherweise vorhandene Verklemmungen werden dann automatisch gelöst, ohne dass es einer aufwändigen Erkennung von Produkten und Verklemmungen und einer entsprechenden Steuerung bedarf.

Das erste und das zweite Förderelement können jedoch auch sensorgesteuert von der ersten in die zweite Stellung bewegt werden, wie hierin unter Bezugnahme auf geeignete Sensoren noch detaillierter beschrieben wird.

In einer bevorzugten Ausführungsform ist der zumindest eine Förderkanal in eine Mehrzahl von Förderkanälen unterteilt, sodass die Fördervorrichtung eine Mehrzahl von Förderkanälen aufweist, die sich in Förderrichtung erstrecken und in einer Richtung quer zur Förderrichtung nebeneinander angeordnet sind. Die bezüglich des zumindest einen Förderkanals beschriebenen Merkmale, insbesondere betreffend dessen Höhe, treffen analog auf die Mehrzahl von Förderkanälen zu. Bevorzugt weist die Fördervorrichtung zumindest in dem Abschnitt des ersten Förderelements, der von dem Abdeckelement bedeckt ist, die Mehrzahl von Förderkanälen auf. Die Mehrzahl von Förderkanälen kann sich jedoch auch auf dem ersten Förderelement über das Abdeckelement hinaus sowie optional auf dem zweiten Förderelement erstrecken. Die Förderkanäle der Mehrzahl von Förderkanälen können beispielsweise einen rechteckigen, einen V-förmigen oder U-förmigen Querschnitt aufweisen.

Besonders bevorzugt sind die Förderkanäle der Mehrzahl von Förderkanälen derart ausgebildet, dass sich genau eine Reihe von hintereinander angeordneten Produkten durch einen Förderkanal bewegen kann. Es passen jedoch nicht zwei oder mehr Produkte nebeneinander in einen Förderkanal. Folglich ist eine Breite jedes Förderkanals der Mehrzahl von Förderkanälen vorzugsweise kleiner als die Breite zweier Produkte, wobei die Breite jeweils in einer Richtung senkrecht zur Förderrichtung und senkrecht zur Höhe der Förderkanäle definiert ist.

Der Spalt erstreckt sich vorzugweise über die Breite einer Mehrzahl von Förderkanälen, besonders bevorzugt über die Breite aller Förderkanäle und somit über die gesamte Breite der ersten Förderfläche. Erstreckt sich der Spalt nicht über die gesamte Breite aller Förderkanäle, ist zumindest ein zweiter Spalt vorgesehen, der sich über die übrige Breite erstreckt. Alle Förderkanäle der Mehrzahl von Förderkanälen führen zum Spalt bzw. zu einem Spalt, sodass eine Abscheidung von Produktbruch in der Fördervorrichtung gewährleistet ist.

Zur Bildung der Mehrzahl von Förderkanälen kann die Fördervorrichtung weiterhin eine Mehrzahl von Führungselementen umfassen, die sich in Förderrichtung erstrecken, in einer Richtung quer zur Förderrichtung nebeneinander angeordnet sind und die Mehrzahl von Förderkanälen für das Schüttgut quer zur Förderrichtung, also in einer ersten Querrichtung senkrecht zur Förderrichtung und senkrecht zur Höhe der Förderkanäle, seitlich begrenzen. Die Mehrzahl von Führungselementen erstreckt sich bevorzugt zumindest in dem Abschnitt des ersten Förderelements, der vom Abdeckelement bedeckt ist, bis zum Spalt.

Eine zweite Querrichtung ist senkrecht zur Förderrichtung und parallel zur Höhe der Förderkanäle bzw. senkrecht zur Abdeckfläche definiert. Das Abdeckelement kann die Mehrzahl von Förderkanälen nach oben begrenzen, also parallel zur zweiten Querrichtung. Die erste Förderfläche und optional auch die zweite Förderfläche kann die Mehrzahl von Förderkanälen in einem Abschnitt des ersten bzw. des zweiten Förderelements, der an den Spalt angrenzt, nach unten begrenzen.

Um die Produkte möglichst zuverlässig über den Spalt zu bewegen und das Risiko einer Verklemmung weiter zu reduzieren, ist es bevorzugt, dass sich die Mehrzahl von Führungselementen weiterhin über den Spalt erstreckt. Dadurch kann erreicht werden, dass die Ausrichtung der Produkte in Förderrichtung bei der Bewegung der Produkte über den Spalt nicht in der ersten Querrichtung beeinflusst wird.

Es kann wünschenswert sein, dass die Mehrzahl von Führungselementen nur in einem bezüglich der Förderrichtung stromabwärts gelegenen Abschnitt des ersten Förderelements angeordnet ist und in einem stromaufwärts gelegenen Abschnitt des ersten Förderelements keine Führungselemente vorgesehen sind. So kann das Schüttgut in dem stromaufwärts gelegenen Abschnitt auf das erste Förderelement geführt werden und die Produkte des Schüttguts und der darin enthaltene Produktbruch können im Laufe der Förderung des Schüttguts in Förderrichtung in die Förderkanäle eingeführt werden.

Die Mehrzahl von Führungselementen kann beispielsweise durch eine Mehrzahl von Leisten gebildet sein, die vorzugsweise auf einer Oberseite des ersten Förderelements angebracht ist. Es ist aber auch denkbar, dass in die Oberseite des ersten Förderelements eine Mehrzahl von Nuten zur Bildung der Mehrzahl von Förderkanälen eingebracht ist. Zwischen den Nuten verbleibende Seitenwände der Nuten bilden dann die Mehrzahl von Führungselementen. Analog kann die Mehrzahl von Führungselementen auch auf dem zweiten Förderelement ausgebildet sein.

Vorzugsweise ist die Mehrzahl von Führungselementen auf dem ersten Förderelement festgelegt bzw. angebracht und ragt in Förderrichtung über das erste Förderelement hinaus, sodass sich die Mehrzahl von Führungselementen über den Spalt erstreckt. Besonders bevorzugt erstreckt sich die Mehrzahl von Führungselementen über den Spalt hinaus und zumindest teilweise über das zweite Förderelement. Die Produkte werden auf diese Weise zuverlässig über den Spalt geführt. Vorzugsweise ist die Mehrzahl von Führungselementen dann nicht mit dem zweiten Förderelement verbunden, sodass dieses weiterhin relativ zum ersten Förderelement bewegbar ist.

Ein Abstand jeweils zweier benachbarter Führungselemente der Mehrzahl von Führungselementen definiert eine Breite eines Förderkanals der Mehrzahl von Förderkanälen, der von den zwei benachbarten Führungselementen begrenzt wird.

Vorzugsweise weisen die Förderkanäle der Mehrzahl von Förderkanälen jeweils eine Breite und eine Höhe auf derart, dass die Produkte eine vordefinierte Ausrichtung bezüglich der Förderrichtung aufweisen und zumindest im Bereich der Mehrzahl von Führungselementen beibehalten. Die Produkte passen folglich nur in einen Förderkanal, wenn sie in der vordefinierten Ausrichtung orientiert sind. Solange die Produkte in einer von der vordefinierten Ausrichtung abweichenden Ausrichtung orientiert sind, gelangen sie nicht in die Mehrzahl von Förderkanälen und werden vor diesen zurückgehalten.

Es ist bevorzugt, dass eine erste Dimension der Produkte in der vordefinierten Ausrichtung parallel zur Förderrichtung definiert ist, wobei das Abscheidekriterium in Abhängigkeit von der ersten Dimension definiert ist. Beispielsweise kann die erste Dimension der Produkte einer Länge der Produkte entsprechen und das Abscheidekriterium kann definiert sein, wie eingangs beschrieben.

Bei länglichen Produkten ist die Länge die größte Dimension der Produkte. Die Förderkanäle können in diesem Fall eine Breite und eine Höhe aufweisen, die kleiner als die Länge der Produkte sind. Auf diese Weise können Produkte nur in die Förderkanäle eintreten, wenn ihre Längsrichtung parallel zur Förderrichtung orientiert ist.

Vorzugsweise beträgt die Höhe jedes Förderkanals der Mehrzahl von Förderkanälen zwischen dem 1,0- und dem 1,5-fachen, mehr bevorzugt zwischen dem 1,05- und dem 1,4-fachen, noch mehr bevorzugt zwischen dem 1,1- und dem 1,2-fachen der Höhe der Produkte in der vordefinierten Ausrichtung.

Vorzugsweise beträgt die Breite jedes Förderkanals der Mehrzahl von Förderkanälen zwischen dem 1,0- und dem 1,5-fachen, mehr bevorzugt zwischen dem 1,05- und dem 1,4-fachen, noch mehr bevorzugt zwischen dem 1,1- und dem 1,2-fachen der Breite der Produkte in der vordefinierten Ausrichtung.

Die Fördervorrichtung weist bevorzugt eine Ausrichteinrichtung auf, die dazu eingerichtet ist, die Produkte des Schüttguts auszurichten, insbesondere in der ersten vordefinierten Ausrichtung. Hierzu ist die Ausrichteinrichtung vorzugsweise bezüglich der Förderrichtung stromaufwärts unmittelbar vor der Mehrzahl von Führungselementen oder an einem Beginn der Mehrzahl von Führungselementen angeordnet, z.B. über einem Anfangsabschnitt der Mehrzahl von Führungselementen. Nicht wie gewünscht ausgerichtete Produkte werden von der Ausrichteinrichtung zurück gehalten, verbleiben vor der Ausrichteinrichtung und werden erneut ausgerichtet. Die Ausrichteinrichtung kann beispielsweise eine Walze, insbesondere eine Lappenwalze oder eine Bürstenwalze, oder eine Bürste umfassen, und eine Längsachse aufweisen, die sich parallel zur ersten Querrichtung erstreckt.

Die Ausrichteinrichtung ist derart relativ zur ersten Förderfläche angeordnet, dass sie mit dem in Förderrichtung geförderten Schüttgut eingreift. Durch den Eingriff mit der Ausrichteinrichtung werden die Produkte des Schüttguts und der darin enthaltene Produktbruch umorientiert und Produkte gelangen zwischen die Mehrzahl von Führungselementen, sobald sie die gewünschte Ausrichtung eingenommen haben. In Abhängigkeit von der Größe des Produktbruchs kann dieser in beliebiger Ausrichtung bzw. unabhängig von einer gewünschten Ausrichtung in die Mehrzahl von Förderkanälen gelangen. Die Ausrichteinrichtung bewirkt ferner, dass das Schüttgut stromabwärts der Ausrichteinrichtung nur einlagig angeordnet ist.

In einer besonders bevorzugten Ausführungsform umfasst die Fördervorrichtung zumindest einen Sensor zum Erkennen von Verklemmungen von Schüttgut, insbesondere von Produkten aber gegebenenfalls auch von Produktbruch, im Spalt. Dadurch kann der Spalt gezielt auf die zweite Breite geöffnet werden, wenn eine zu lösende Verklemmung erkannt wird. Auf ein Öffnen des Spalts in regelmäßigen zeitlichen Abständen, das das Abscheiden unversehrter Produkte und somit eine Verringerung der Ausbringung mit sich bringt, kann dann verzichtet werden.

In dieser Ausführungsform kann der Stellantrieb, der das erste und das zweite Förderelement relativ zueinander bewegt, dazu eingerichtet sein, das erste und das zweite Förderelement in Reaktion auf ein Signal des zumindest einen Sensors relativ zueinander aus der ersten in die zweite Stellung zu bewegen. Beispielsweise umfasst die Fördervorrichtung eine Steuereinrichtung und der zumindest eine Sensor ist dazu eingerichtet, ein Signal an die Steuereinrichtung zu übermitteln, das kennzeichnend für eine Verklemmung eines Produkts ist, und die Steuereinrichtung ist dazu eingerichtet, den Stellantrieb in Reaktion auf das erhaltene Signal zu betätigen, um den Spalt zu öffnen.

Der zumindest eine Sensor kann auf unterschiedliche Art und Weise ausgebildet und angeordnet sein, wie nachfolgend beschrieben. Der zumindest eine Sensor ist vorzugsweise derart ausgebildet, dass er Verklemmungen in allen Förderkanälen der Mehrzahl von Förderkanälen erkennt. Hierzu kann genau ein Sensor oder eine Mehrzahl von Sensoren vorgesehen sein. Bei einer Mehrzahl von Sensoren ist jeder Sensor vorzugsweise einem Teil der Mehrzahl von Förderkanälen zugeordnet. Die Sensoren der Mehrzahl von Sensoren können alle gemäß einer der nachfolgend beschriebenen Ausführungsformen ausgebildet und angeordnet sein oder beliebig aus diesen Ausführungsformen kombiniert werden.

In einer ersten Ausführungsform kann der zumindest eine Sensor oberhalb des Spalts angeordnet und dazu eingerichtet sein, im Spalt verweilendes Schüttgut oder Produktbruch zu erfassen. Insbesondere kann der zumindest eine Sensor oberhalb des Abdeckelements angeordnet sein, welches dann vorzugsweise zumindest teilweise oder vollständig transparent ausgebildet ist. Zum Erfassen eines im Spalt verweilenden Schüttguts oder Produktbruchs kann der zumindest eine Sensor dazu eingerichtet sein, ein Schüttgut bzw. den Produktbruch im Bereich des Spalts zu erkennen und einen Zeitraum zu erfassen, für den sich das Schüttgut bzw. der Produktbruch im Bereich des Spalts befindet. Übersteigt der erfasste Zeitraum einen vordefinierten Grenzwert, ist von einer Verklemmung auszugehen und eine solche wird erkannt. Der zumindest eine Sensor könnte auch eine Bewegung der erkannten Produkte in Förderrichtung registrieren und eine Verklemmung erkennen, wenn keine Bewegung eines erkannten Produkts mehr erfasst wird.

In einer zweiten Ausführungsform kann der zumindest eine Sensor in dem Spalt oder unterhalb des Spalts, vorzugsweise unterhalb des ersten und/oder des zweiten Förderelements, angeordnet und dazu eingerichtet sein, im Spalt verweilendes Schüttgut oder den Durchtritt von Schüttgut durch den Spalt zu erfassen. Beispielsweise ist der zumindest eine Sensor in dieser Ausführungsform als Lichtschranke ausgebildet, wobei der Lichtstrahl vorzugsweise im Spalt angeordnet ist. Fällt Produktbruch durch den Spalt hindurch, wird der Durchtritt von Schüttgut erkannt, indem der Lichtstrahl kurz unterbrochen wird. Kippt ein Produkt bzw. großer Produktbruch in den Spalt und verklemmt sich, wird das im Bereich des Spalts verweilende Produkt bzw. der Produktbruch beispielsweise dadurch erkannt, dass der Lichtstrahl für längere Zeit oder dauerhaft unterbrochen wird.

In einer dritten Ausführungsform ist der zumindest eine Sensor bezüglich der Förderrichtung stromaufwärts des Spalts, vorzugsweise stromaufwärts des Abdeckelements, angeordnet und dazu eingerichtet, sich stauendes Schüttgut zu erfassen. Verklemmt sich beispielsweise ein Produkt im Spalt bzw. in einem der Mehrzahl von Förderkanälen, blockiert es nachfolgende Produkte und Produktbruch. Dadurch staut sich das Schüttgut. Der zumindest eine Sensor kann dazu eingerichtet sein, das Schüttgut vor dem Abdeckelement zu erfassen und zu erkennen, dass sich das Schüttgut staut bzw. nicht weiter in Förderrichtung bewegt. Es ist dann von einer Verklemmung auszugehen und eine solche wird erkannt.

In der ersten und der dritten Ausführungsform kann der zumindest eine Sensor beispielsweise als optoelektronischer Sensor ausgebildet sein.

In einer vierten Ausführungsform kann der zumindest eine Sensor bezüglich der Förderrichtung stromabwärts des Spalts angeordnet sein, vorzugsweise einer der Fördervorrichtung nachfolgenden Bearbeitungsstation zugeordnet sein, und dazu eingerichtet sein, eine sinkende Ausbringung der Fördervorrichtung zu erfassen. Beispielsweise ist der zumindest eine Sensor in dieser Ausführungsform als Füllstandsensor in einer nachfolgenden Bearbeitungsstation ausgebildet, der dazu eingerichtet ist, zu erkennen, dass von der Fördervorrichtung zu wenige Produkte zugeführt werden, wodurch auf eine Verklemmung von Produkten in der Fördervorrichtung geschlossen kann.

Alle hierin bezüglich der Fördervorrichtung beschriebenen Merkmale und Vorteile treffen auch auf die Blistermaschine zu und umgekehrt.

Die Blistermaschine kann weiterhin eine Formstation zum Formen der Näpfe in eine Formfolie umfassen, die vor der Füllstation angeordnet ist, sowie eine Siegelstation zum Siegeln einer Deckfolie an die Formfolie umfassen, die nach der Füllstation angeordnet ist. Zudem kann die Blistermaschine eine Stanzstation zum Ausstanzen von Blisterpackungen aus dem Folienverbund von Formfolie und Deckfolie umfassen.

Ein erfindungsgemäßes Verfahren zum Fördern und Sortieren von Schüttgut umfassend eine Vielzahl von Produkten, insbesondere von medizinischen oder pharmazeutischen Produkten, und Produktbruch derselben, das mittels der erfindungsgemäßen Blistermaschine ausgeführt wird, umfasst die folgenden Schritte:
Fördern des Schüttguts auf der ersten Förderfläche in der Förderrichtung zu dem Spalt, der in Förderrichtung die erste Breite gemäß dem vordefinierten Abscheidekriterium aufweist derart, dass der Durchtritt von Produktbruch durch den Spalt ermöglicht ist und der Durchtritt von Produkten durch den Spalt unterbunden ist;
Bewegen der Produkte in Förderrichtung über den Spalt hinweg auf die zweite Förderfläche und Abscheiden von Produktbruch durch den Spalt hindurch; und
Fördern der Produkte auf der zweiten Förderfläche weiter in Förderrichtung.

Der Spalt ist folglich derart ausgebildet, dass Produktbruch durch den Spalt hindurch fällt, während Produkte über den Spalt hinweg bewegt werden. Auf diese Art und Weise wird Produktbruch automatisch und zuverlässig aussortiert, während Produkte ohne wesentliche Beeinflussung der Ausbringung weiter gefördert werden.

Für das Schüttgut, die Produkte, den Produktbruch, das Abscheidekriterium und die Ausbildung des Spalts gelten die eingangs gemachten Definitionen, Ausführungen und vorteilhaften Merkmale analog und unabhängig von der Ausbildung der Fördervorrichtung.

Alle in Zusammenhang mit der Fördervorrichtung und der Blistermaschine beschriebenen Merkmale und Vorteile lassen sich analog auf das erfindungsgemäße Verfahren übertragen und umgekehrt.

Das Abscheiden von Produktbruch umfasst bevorzugt das freie Fallen des Produktbruchs durch den Spalt, insbesondere ohne dass der Produktbruch durch zusätzliche Ablenkmittel, wie zum Beispiel Klappen, Schieber, Luftdüsen oder dergleichen erfasst und abgeführt wird. Das Bewegen der Produkte erfolgt über den freien Spalt und somit ohne zusätzliche Unterstützung durch weitere Stütz- oder Ablenkmittel, die den Spalt temporär verschließen oder blockieren würden. Dadurch ergibt sich eine sehr zuverlässige, aber dennoch einfache und kostengünstige Möglichkeit zum Abscheiden des Produktbruchs, die ohne zusätzliche anzutreibende und anzusteuernde Komponenten auskommt.

Das Bewegen der Produkte über den Spalt kann das seitliche Führen der Produkte im Bereich des Spalts umfassen, beispielsweise mittels der Mehrzahl von Führungselementen, um eine bestimmte Ausrichtung der Produkte sicherzustellen und das Risiko des Verklemmens der Produkte im Bereich des Spalts zu reduzieren.

Das Bewegen der Produkte über den Spalt kann auch das Verhindern des Kippens der Produkte in den Spalt umfassen, insbesondere durch Niederhalten der Produkte im Bereich des Spalts, beispielsweise mittels des Abdeckelements. Auch dadurch kann das Risiko von Verklemmungen im Bereich des Spalts reduziert werden.

Durch das seitliche Führen der Produkte und das Verhindern des Kippens der Produkte wird erreicht, dass die Produkte eine ihnen aufgeprägte Ausrichtung (z.B. die vordefinierte Ausrichtung) beim Bewegen über dem Spalt im Wesentlichen beibehalten und dadurch zuverlässig und ohne Verklemmung über den Spalt bewegt werden.

In einer bevorzugten Ausführungsform umfasst das Fördern des Schüttguts zum Spalt weiterhin:
Ausrichten der Produkte des Schüttguts, vorzugsweise mittels der Ausrichteinrichtung, sodass die Produkte die vordefinierte Ausrichtung bezüglich der Förderrichtung aufweisen, wobei die erste Dimension der Produkte in der vordefinierten Ausrichtung parallel zur Förderrichtung definiert ist, wobei das Abscheidekriterium in Abhängigkeit von der ersten Dimension definiert ist;
Führen der Produkte des Schüttguts zum Spalt derart, dass die Produkte die vordefinierte Ausrichtung beibehalten.

Auf diese Weise gelangen die Produkte stets in der vordefinierten Ausrichtung zum Spalt, sodass die erste Breite des Spalts und das Abscheidekriterium in Abhängigkeit von der ersten Dimension gewählt werden können und ein zuverlässiges Abscheiden gewährleistet ist.

Das Bewegen der Produkte über den Spalt hinweg kann dann das Führen der Produkte über den Spalt derart umfassen, dass die Produkte die vordefinierte Ausrichtung im Wesentlichen beibehalten, beispielsweise durch das seitliche Führen und das Verhindern des Kippens, wie zuvor beschrieben.

Dass die Produkte die vordefinierte Ausrichtung im Wesentlichen beibehalten, bedeutet, dass die Produkte die vordefinierte Ausrichtung sowohl unmittelbar vor als auch unmittelbar nach dem Spalt aufweisen. Auch im Bereich des Spalts können die Produkte die vordefinierte Ausrichtung aufweisen. Aufgrund geringer Abstände der Produkte zu den Führungselementen und zum Abdeckelement und aufgrund von Toleranzen in den Dimensionen der Produkte ist es jedoch möglich, dass die Produkte beim Überschreiten der Ränder des ersten und des zweiten Förderelements, die den Spalt begrenzen, minimal kippen. Ein weiteres Kippen wird jedoch unmittelbar unterbunden, wie zuvor beschrieben.

Das Verfahren kann vor dem Fördern des Schüttguts zum Spalt weiterhin das Definieren des Abscheidekriteriums oder das Auswählen eines geeigneten Abscheidekriteriums umfassen, insbesondere wie eingangs beispielhaft beschrieben.

Besonders bevorzugt umfasst das Verfahren vor dem Fördern des Schüttguts zum Spalt das Einstellen der ersten Breite des Spalts gemäß dem vordefinierten Abscheidekriterium. Das Einstellen der ersten Breite kann das Bewegen des ersten und des zweiten Förderelements relativ zueinander umfassen, z.B. durch Bewegen des zweiten Förderelements bezüglich des ersten Förderelements.

Das Einstellen der ersten Breite kann manuell erfolgen oder automatisch mittels der Steuereinrichtung basierend auf einer durch einen Nutzer eingegebenen Breite, einer von dem Nutzer ausgewählten Breite oder einem vom Nutzer vorgegebenen Abscheidekriterium.

Um etwaige Verklemmungen zu lösen, umfasst das Verfahren vorzugsweise das Öffnen des Spalts von der ersten Breite auf eine zweite Breite, die größer als die erste Breite ist, vorzugsweise mittels des Stellantriebs. Das Öffnen des Spalts kann in vorgegebenen Zeitintervallen oder aber, wie zuvor beschrieben, sensorgesteuert erfolgen.

In einer besonders bevorzugten Ausführungsform umfasst das Verfahren daher weiterhin:
Erkennen einer Verklemmung eines Produkts bzw. Produktbruchs des Schüttguts im Spalt mittels zumindest eines Sensors;
Bereitstellen eines eine Verklemmung kennzeichnenden Signals mittels des zumindest einen Sensors, wenn eine Verklemmung erkannt wird; und
Öffnen des Spalts auf die zweite Breite in Reaktion auf das Signal, um die Verklemmung zu lösen.

Vorzugsweise stellt der zumindest eine Sensor das Signal der Steuereinrichtung bereit, die in Reaktion auf das Signal den Stellantrieb zum Öffnen des Spalts ansteuert. Das Öffnen des Spalts erfolgt dann mittels des Stellantriebs. Das Erkennen einer Verklemmung kann auch durch den zumindest einen Sensor und die Steuereinrichtung gemeinsam erfolgen. Z.B. kann die Steuereinrichtung einen Vergleich von Ist-Werten, die vom Sensor ermittelt werden, mit Soll-Werten vornehmen.

Der zumindest eine Sensor kann aus den bereits beschriebenen Ausführungsformen von Sensoren gewählt sein. Es kann auch eine Mehrzahl von Sensoren gemäß einer dieser Ausführungsformen oder aus einer Kombination dieser Ausführungsformen vorgesehen sein.

Das Erkennen einer Verklemmung im Spalt kann auf unterschiedliche Art und Weise erfolgen. Gemäß einer Ausführungsform umfasst das Erkennen einer Verklemmung das Erfassen eines Zeitraums, für den sich die Produkte bzw. der Produktbruch im Bereich des Spalts befinden, das Vergleichen des erfassten Zeitraums mit einem vordefinierten Grenzwert, und das Feststellen einer Verklemmung, wenn der erfasste Zeitraum größer als der vordefinierte Grenzwert ist. Zum Erfassen des Zeitraums können zunächst die Produkte bzw. der grobe Produktbruch erkannt werden. Der zumindest eine Sensor ist in diesem Fall vorzugsweise gemäß der oben beschriebenen ersten Ausführungsform ausgebildet.

Gemäß einer anderen Ausführungsform umfasst das Erkennen einer Verklemmung das Erfassen eines Durchtritts von Produktbruch durch den Spalt und das Feststellen einer Verklemmung, wenn kein Durchtritt erfasst wird oder kein Durchtritt mehr erfasst werden kann, beispielsweise weil ein Produkt den zumindest einen Sensor blockiert. Der zumindest eine Sensor ist in diesem Fall vorzugsweise gemäß der oben beschriebenen zweiten Ausführungsform ausgebildet.

Gemäß einer weiteren Ausführungsform umfasst das Erkennen einer Verklemmung das Erfassen des Schüttguts stromaufwärts des Spalts, das Erkennen sich stauenden Schüttguts stromaufwärts des Spalts, und das Feststellen einer Verklemmung, wenn sich stauendes Schüttgut erkannt wird. Der zumindest eine Sensor ist in diesem Fall vorzugsweise gemäß der oben beschriebenen dritten Ausführungsform ausgebildet.

Gemäß noch einer anderen Ausführungsform umfasst das Erkennen einer Verklemmung das Erfassen der Vielzahl von Produkten des Schüttguts stromabwärts des Spalts, das Erkennen einer sinkenden Ausbringung der Produkte stromabwärts des Spalts und das Feststellen einer Verklemmung, wenn eine sinkende Ausbringung erkannt wird. Der zumindest eine Sensor ist in diesem Fall vorzugsweise gemäß der oben beschriebenen vierten Ausführungsform ausgebildet.

Weitere Vorteile und Merkmale der vorliegenden Erfindung ergeben sich aus der nachfolgenden Beschreibung unter Bezugnahme auf die beigefügten Zeichnungen.
- Fig. 1: ist eine schematische Seitenansicht einer Fördervorrichtung, die zur Verwendung in der erfindungsgemäßen Blistermaschine geeignet ist.
- Fig. 2: ist eine schematische Seitenansicht einer Ausrichteinrichtung der Fördervorrichtung nach Fig. 1.
- Fig. 3: ist eine Schnittansicht der Fördervorrichtung entlang der Linie III-III in Fig. 2.
- Fig. 4a, b: sind Seitenansichten der Fördervorrichtung nach Fig. 1 im Bereich eines Spalts.
- Fig. 5: ist eine perspektivische Ansicht wesentlicher Komponenten der Fördervorrichtung nach Fig. 1.
- Fig. 6a, b: sind Draufsichten auf einen Ausschnitt der Fördervorrichtung im Bereich des Spalts.
- Fig. 7: ist eine Draufsicht entsprechend Fig. 6a, b mit schematischer Darstellung von Sensoren.
- Fig. 8: ist eine Schnittansicht der Fördervorrichtung entlang der Linie VIII-VIII in Fig. 7.
- Fig. 9: ist eine schematische Darstellung einer Ausführungsform der erfindungsgemäßen Blistermaschine mit einer Fördervorrichtung.

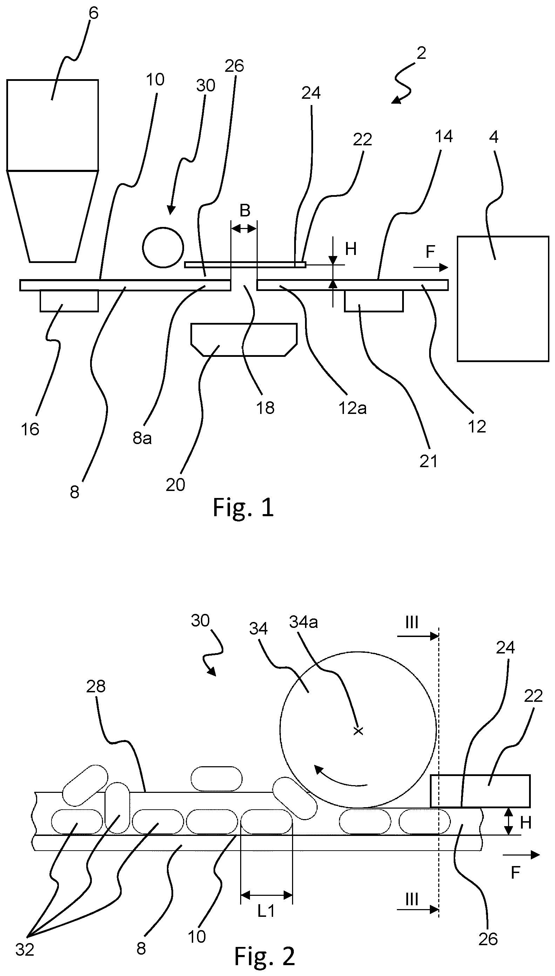

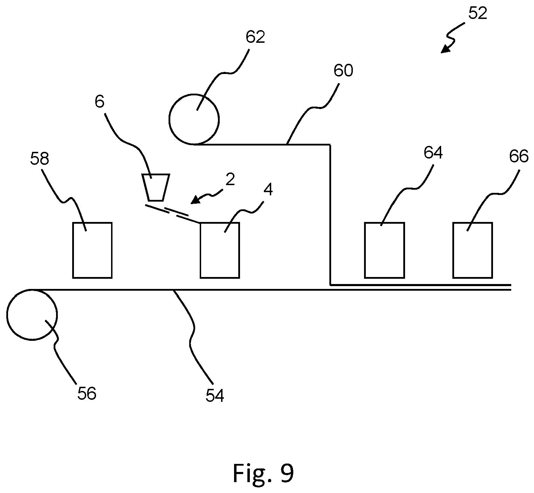

Fig. 1 zeigt schematisch eine Fördervorrichtung 2 in einer Seitenansicht. Die Fördervorrichtung 2 ist dazu eingerichtet, einer Bearbeitungsstation 4 in Form von Schüttgut vorliegende Produkte zuzuführen. Neben den Produkten umfasst das Schüttgut auch Produktbruch, der während des Transports zur Bearbeitungsstation 4 abzuscheiden ist, um nur Produkte vorbestimmter Qualität weiterzuverarbeiten. Bei der Bearbeitungsstation 4 kann es sich zum Beispiel um eine Füllstation einer Blistermaschine handeln, wie unter Bezugnahme auf Fig. 9 erläutert.

Das Schüttgut umfassend eine Vielzahl von Produkten, insbesondere von medizinischen oder pharmazeutischen Produkten, und Produktbruch derselben wird beispielsweise in einem Produktspeicher 6 bereitgestellt. Der Produktspeicher 6 ist dazu eingerichtet das Schüttgut aufzunehmen und an die Fördervorrichtung 2 abzugeben.

Die Fördervorrichtung 2 umfasst ein erstes Förderelement 8, das eine erste Förderfläche 10 aufweist, und ein zweites Förderelement 12, das eine zweite Förderfläche 14 aufweist. Die erste und die zweite Förderfläche 10, 14 sind an der Oberseite des jeweiligen Förderelements 8, 12 angeordnet. Das Schüttgut wird auf der ersten Förderfläche 10 und der zweiten Förderfläche 14 in eine Förderrichtung F gefördert. In Förderrichtung F ist das zweite Förderelement 12 dem ersten Förderelement 8 nachgeschaltet.

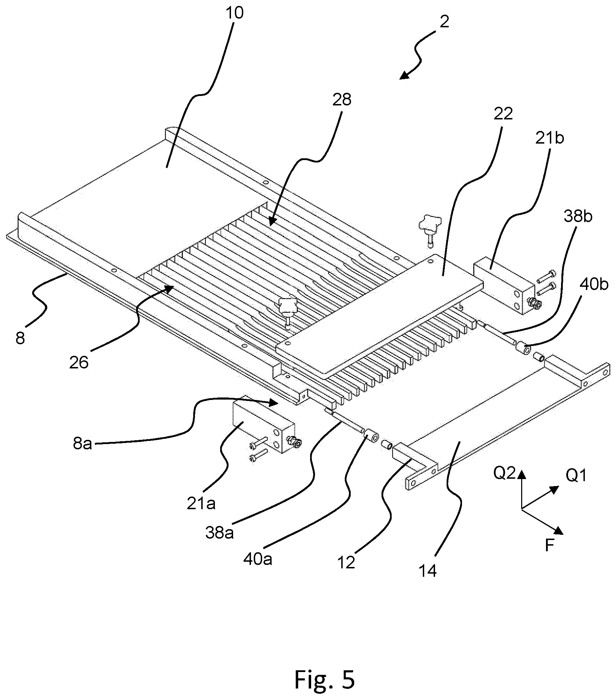

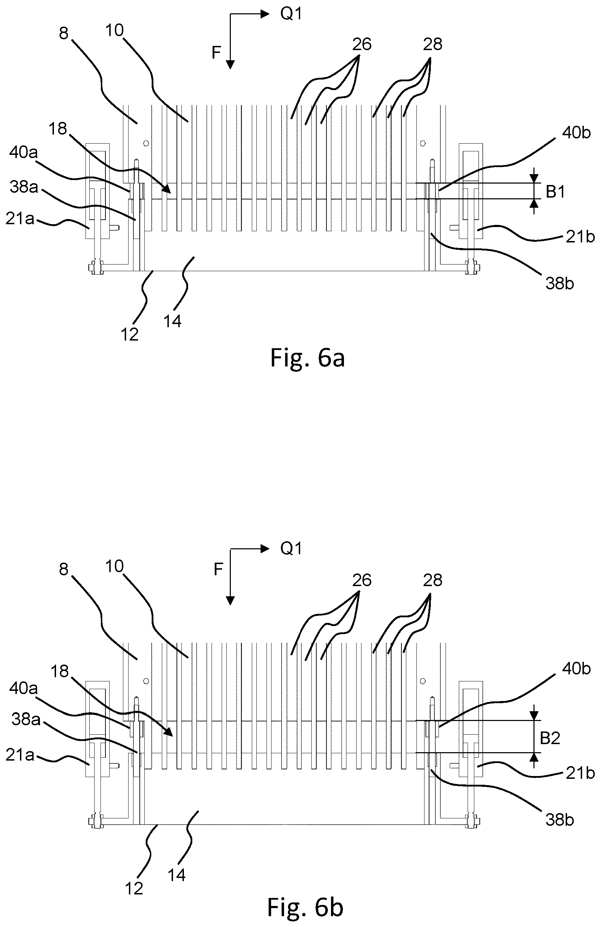

Das erste und das zweite Förderelement 8, 12 können plattenförmig ausgebildet sein, wie beispielsweise von Vibrationsförderern bekannt. Dabei wird das Schüttgut durch Schwingungen des ersten und des zweiten Förderelements 8, 12 relativ zu den Förderflächen 10, 14 fortbewegt. Zum Erzeugen der Schwingungen kann die Fördervorrichtung 2 eine Antriebseinrichtung 16 aufweisen, die mit einem aus dem ersten und dem zweiten Förderelement 8, 12 gekoppelt ist, hier mit dem ersten Förderelement 8. Zum Übertragen der Schwingungen vom ersten auf das zweite Förderelement 8, 12 können diese miteinander verbunden sein, wie zum Beispiel aus Fig. 5 und 6 hervorgeht.

Das erste und das zweite Förderelement 8, 12 sind in Förderrichtung F beabstandet zueinander angeordnet, sodass ein Spalt 18 mit einer Breite B zwischen dem ersten und dem zweiten Förderelement 8, 12 ausgebildet ist. In einer ersten Stellung des ersten und des zweiten Förderelements 8, 12 weist der Spalt 18 eine erste Breite B1 auf. Die erste Breite B1 ist gemäß einem vordefinierten Abscheidekriterium derart gewählt, dass Produktbruch durch den Spalt 18 hindurch fällt und sich Produkte über den Spalt 18 hinweg bewegen, um auf diese Weise den Produktbruch abzuscheiden und nur Produkte ausreichender Qualität weiterzuverarbeiten. Unter dem Spalt 18 kann ein Auffangbehälter 20 zur Aufnahme des Produktbruchs angeordnet sein, der durch den Spalt 18 fällt.

Die Breite B des Spalts 18 ist besonders bevorzugt einstellbar, um sie gemäß dem vordefinierten Abscheidekriterium einstellen zu können und um sich gegebenenfalls im Bereich des Spalts 18 verklemmende Produkte lösen zu können. Hierzu sind das erste und das zweite Förderelement 8, 12 in Förderrichtung F relativ zueinander bewegbar, wie unter Bezugnahme auf Fig. 6a und 6b detaillierter beschrieben. Im dargestellten Ausführungsbeispiel ist ein Stellantrieb 21 vorgesehen, der zumindest mit dem zweiten Förderelement 12 gekoppelt ist, um dieses bezüglich des ersten Förderelements 8 zu bewegen.

Die Fördervorrichtung 2 umfasst ferner ein Abdeckelement 22 mit einer Abdeckfläche 24, die im Wesentlichen parallel zur ersten Förderfläche 10 und zur zweiten Förderfläche 12 angeordnet und diesen zugewandt ist. Das Abdeckelement 22 ist über dem Spalt 18 sowie über jeweils einem Abschnitt 8a, 12a des ersten und des zweiten Förderelements 8, 12 angeordnet, die an den Spalt 18 angrenzen.

Die Abdeckfläche 24, die erste Förderfläche 10 und die zweite Förderfläche 14 bilden zumindest einen Förderkanal 26, in dem das Schüttgut auf der ersten Förderfläche 10 zum Spalt 18 und Produkte auf der zweiten Förderfläche 14 weiter in Förderrichtung F gefördert werden. Der zumindest eine Förderkanal 26 weist eine Höhe H auf, die durch den Abstand der Abdeckfläche 24 zu den Förderflächen 10, 14 und senkrecht zur Abdeckfläche 24 definiert ist.

Um ein möglichst zuverlässiges Abscheiden des Produktbruchs bzw. Bewegen der Produkte über den Spalt 18 zu gewährleisten, weisen die Produkte im Bereich des Spalts 18 bevorzugt eine vordefinierte Ausrichtung auf. Zum einen kann hierzu der zumindest eine Förderkanal 26 eine Höhe H aufweisen derart, dass Produkte nur in einer bestimmten Orientierung in den zumindest einen Förderkanal 26 passen bzw. Produkte bestimmter Orientierung(en) nicht in den zumindest einen Förderkanal 26 passen.

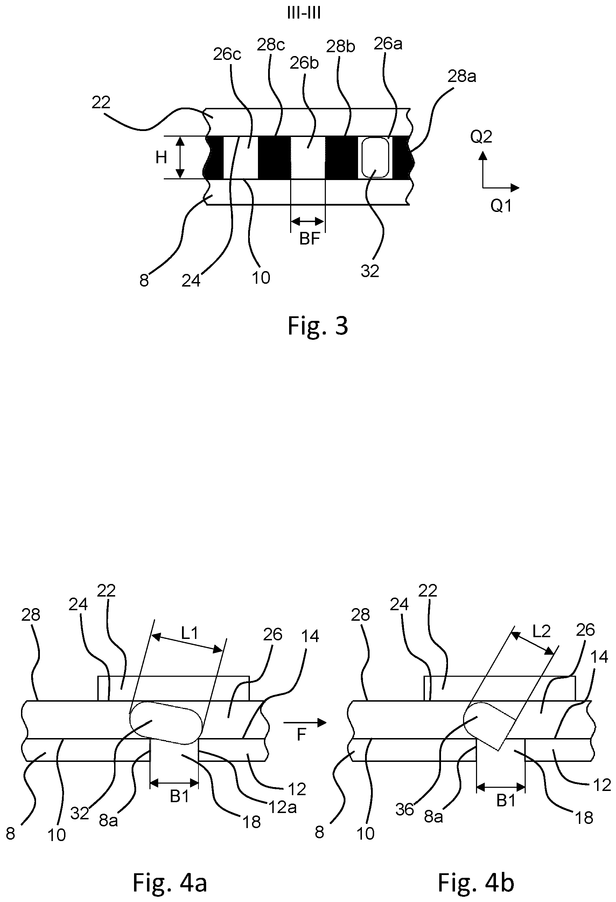

Zusätzlich oder alternativ kann die Fördervorrichtung 2 eine Mehrzahl von Führungselementen 28 und/oder eine bezüglich der Förderrichtung F stromaufwärts des Abdeckelements 22 angeordnete Ausrichteinrichtung 30 umfassen, wie nachfolgend unter Bezugnahme auf Fig. 2 und Fig. 3 ausführlich beschrieben.

In Fig. 2 sind Produkte 32 des Schüttguts bezüglich der Förderrichtung F stromaufwärts sowie stromabwärts der Ausrichteinrichtung 30 zu sehen. Die Fig. 3 ist eine Schnittansicht der Fördervorrichtung 2 im Bereich des ersten Förderelements 8 und des Abdeckelements 22 entlang der Linie III-III in Fig. 2.

Die Ausrichteinrichtung 30 kann beispielsweise eine Walze 34 umfassen, die als Lappenwalze oder Bürstenwalze ausgebildet sein kann. Die Walze 34 ist derart angeordnet, dass sich ihre Längsachse 34a senkrecht zur Förderrichtung F und parallel zur ersten Förderfläche 10 erstreckt. Stromaufwärts der Ausrichteinrichtung 30 kann das Schüttgut ungeordnet und mehrlagig auf dem ersten Förderelement 8 angeordnet sein. Die Walze 34 ist so angeordnet, dass sie mit dem in Förderrichtung F geförderten Schüttgut eingreift, wodurch das Schüttgut teilweise zurückgehalten und umorientiert wird. Vorteilhafterweise rotiert die Walze 34 hierzu. Eine Drehrichtung der Walze 34 ist im Bereich des Eingriffs mit dem Schüttgut vorzugsweise der Förderrichtung F entgegengerichtet.

Zudem kann die Walze 34 den Durchlass zwischen der Walze 34 und der ersten Förderfläche 10 derart begrenzen, dass das Schüttgut bzw. die Produkte 32 nur einlagig weiter gefördert werden. Bevorzugt ist der Durchlass bereits auf die Höhe H des zumindest einen Förderkanals 26 begrenzt. Ferner kann die Ausrichteinrichtung 30 über der Mehrzahl von Führungselementen 28 angeordnet sein und das Schüttgut solange umorientieren, bis die Produkte 32 und der Produktbruch in die Förderkanäle 26 zwischen den Führungselementen 28 eintreten.

Wie in Fig. 3 zu sehen, unterteilt die Mehrzahl von Führungselementen 28, von denen hier drei Führungselemente 28a, 28b, 28c dargestellt sind, den Förderkanal 26 in eine Mehrzahl von Förderkanälen, von denen drei Förderkanäle 26a, 26b, 26c zu sehen sind. Sowohl die Mehrzahl von Förderkanälen 26 als auch die Mehrzahl von Führungselementen 28 verlaufen in Förderrichtung F und sind in einer ersten Querrichtung Q1 senkrecht zur Förderrichtung F und parallel zur ersten Förderfläche 10 bzw. zur Abdeckfläche 24 nebeneinander angeordnet. Die Mehrzahl von Führungselementen 28 begrenzt die Mehrzahl von Förderkanälen 26 in der ersten Querrichtung Q1. Das Abdeckelement 22 begrenzt die Mehrzahl von Förderkanälen 26 nach oben und die erste Förderfläche 10 begrenzt die Mehrzahl von Förderkanälen 26 nach unten. Folglich ist jeder Förderkanal 26a, 26b, 26c seitlich durch zwei Führungselemente 28a, 28b, 28c und nach oben und unten durch die Abdeckfläche 24 und die erste Förderfläche 10 begrenzt. Ein Abstand zweier benachbarter Führungselemente 28a, 28b definiert eine Breite BF der Mehrzahl von Förderkanälen 26.

Wie in Fig. 2 und 3 dargestellt, kann die Mehrzahl von Förderkanälen 26 eine Breite BF und eine Höhe H aufweisen derart, dass die Produkte 32 eine vordefinierte Ausrichtung bezüglich der Förderrichtung F aufweisen und zumindest im Bereich der Mehrzahl von Führungselementen 28 beibehalten. Die Breite BF und die Höhe H der Mehrzahl von Förderkanälen 26 sind hierzu nicht wesentlich größer als eine Breite der Produkte 32 und eine Höhe der Produkte 32, sodass ein Kippen der Produkte um eine Achse parallel zur Förderrichtung F vermieden wird. Insbesondere ist hier die Breite BF der Mehrzahl von Förderkanälen 26 kleiner als eine Höhe der Produkte 32 und sowohl die Breite BF als auch die Höhe H der Mehrzahl von Förderkanälen 26 ist kleiner als die Länge L der Produkte 32. Die Produkte 32 können folglich nur in der dargestellten, vordefinierten Ausrichtung in den Förderkanälen 26 aufgenommen werden.

Eine erste Dimension der Produkte 32, hier eine Länge L1 der Produkte 32, ist in der vordefinierten Ausrichtung parallel zur Förderrichtung F definiert. Das Abscheidekriterium ist bevorzugt in Abhängigkeit von dieser ersten Dimension definiert.

Das Abscheiden von Produktbruch 36, in Fig. 4b beispielhaft anhand eines Teilstücks 36 eines Produkts 32 dargestellt, wird nun unter Bezugnahme auf die Figuren 4a und 4b näher erläutert. Zunächst wird das Schüttgut umfassend eine Vielzahl von Produkten 32 und Produktbruch 36 derselben auf der ersten Förderfläche 10 in Förderrichtung F zum Spalt 18 gefördert. Dabei kann das Schüttgut, wie eben beschrieben, mittels der Ausrichteinrichtung 30 vorsortiert bzw. ausgerichtet werden. Am Spalt 18 angekommen, werden Produkte 32 über den Spalt 18 hinweg bewegt, wie in Fig. 4a dargestellt, während Produktbruch 36 durch den Spalt 18 hindurch fällt und dadurch abgeschieden wird, wie in Fig. 4b dargestellt.

Die erste Breite B1 des Spalts 18 ist hierzu gemäß dem vordefinierten Abscheidekriterium derart eingestellt, dass sich die Produkte 32 über den Spalt 18 hinweg bewegen. Hier ist die Breite B1 kleiner als die Länge L1 der Produkte 32 in der vordefinierten Ausrichtung und die Produkte 32 sind im Bereich des Spalts 18 derart geführt, dass sie die vordefinierte Ausrichtung im Wesentlichen beibehalten. Dadurch können die Produkte 32 nicht durch den Spalt 18 hindurch fallen. Insbesondere verhindert das Abdeckelement 22, dass die Produkte 32 über einen den Spalt 18 begrenzenden Rand 8b des ersten Förderelements 8 in den Spalt 18 kippen. Aufgrund des geringfügigen Spiels zwischen den Produkten 32 und der ersten Förderfläche 10 sowie der Abdeckfläche 24 und einer Toleranz der Größe der Produkte 32 können die Produkte 32 höchstens leicht kippen, werden dann jedoch vom Abdeckelement 22 blockiert und zuverlässig weiter in Förderrichtung F über den Spalt 18 bewegt.

Ist das Abscheidekriterium beispielsweise so definiert, dass nur Produkte mit einer Länge L größer 90 % der Länge L1 unversehrter Produkte 32 weiterverarbeitet werden sollen, bilden alle Teilstücke von Produkten mit einer Länge L2 kleiner als 90 % der Länge L1 Produktbruch 36, wie beispielsweise das in Fig. 4b dargestellte Teilstück 36. Die erste Breite B1 des Spalts 18 ist nun so eingestellt, dass Produktbruch 36 durch den Spalt 18 hindurch fällt und dadurch von den Produkten 32 abgeschieden wird. Folglich sollte die Breite B1 des Spalts nicht wesentlich kleiner als 90 % der Länge L1 sein. Um ein zuverlässiges Abscheiden gemäß dem vordefinierten Abscheidekriterium zu ermöglichen, sollte die erste Breite B1 in diesem Ausführungsbeispiel etwa 90 % der Länge L1 betragen.

In Fig. 5 sind die wesentlichen Komponenten der Fördervorrichtung 2 in einer perspektivischen Ansicht detaillierter dargestellt. Zu sehen sind das erste Förderelement 8, das zweite Förderelement 12 und das Abdeckelement 22. Die zu den einzelnen Komponenten beschriebenen Merkmale sind überwiegend unabhängig von der Ausbildung der jeweils anderen Komponenten.

Das erste Förderelement 8 ist im Wesentlichen plattenförmig ausgebildet. Auf dem ersten Förderelement 8 bzw. auf der ersten Förderfläche 10 ist die Mehrzahl von Führungselementen 28 angeordnet, um die Mehrzahl von Förderkanälen 26 zu bilden. Die Mehrzahl von Führungselementen 28 erstreckt sich in diesem Fall nur in einem stromabwärts gelegenen Abschnitt des ersten Förderelements 8, während in einem stromaufwärts gelegenen Abschnitt des ersten Förderelements 8 keine Führungselemente 28 vorgesehen sind und die erste Förderfläche 10 im Wesentlichen eben ausgebildet ist. Der Produktspeicher 6 gibt das Schüttgut in diesem stromaufwärts gelegenen Abschnitt auf das erste Förderelement 8 ab. Die Mehrzahl von Führungskanälen 26 kann in Form von Nuten ausgebildet sein, die in die Oberseite des ersten Förderelements 8 eingebracht sind. So fällt zumindest ein Teil des Schüttguts bereits bei der Förderung in Förderrichtung F in einer bestimmten Ausrichtung in die Führungskanäle 26.

Das Abdeckelement 22 ist hier am ersten Förderelement 8 festgelegt. Um Zugriff auf den Spalt 18 zu erhalten, ist das Abdeckelement 22 bevorzugt lösbar mit dem ersten Förderelement 8 verbunden, insbesondere mit dem ersten Förderelement 8 verschraubt. Dabei deckt das Abdeckelement 22 die Mehrzahl von Förderkanälen 26 in dem an den Spalt 18 angrenzenden Abschnitt 8a des ersten Förderelements 8 ab.

Bezüglich des zweiten Förderelements 12 wird zugleich auf die Figuren 6a und 6b verwiesen, die eine entsprechende Draufsicht auf die in Fig. 5 dargestellten Komponenten im Bereich des Spalts 18 zeigen. Dabei ist das Abdeckelement 22 ausgeblendet.

Das zweite Förderelement 12 ist ebenfalls plattenförmig ausgebildet und die zweite Förderfläche 14 ist im Wesentlichen eben. Die Mehrzahl von Führungselementen 28 kann sich über das erste Förderelement 8 hinaus und zumindest teilweise über das zweite Förderelement 12 erstrecken, um auch zumindest in dem stromaufwärts gelegenen Abschnitt 12a des zweiten Förderelements 12, der an den Spalt 18 angrenzt, die Mehrzahl von Förderkanälen 26 zu bilden. Auch das Abdeckelement 22 erstreckt sich bis in den Abschnitt 12a des zweiten Förderelements 12.

Um bezüglich des ersten Förderelements 8 beweglich zu sein, kann das zweite Förderelement 12 beweglich mit dem ersten Förderelement 8 verbunden sein. Wie dargestellt, kann das zweite Förderelement 12 verschiebbar auf zwei Führungsstiften 38a, b gelagert sein, die wiederum am ersten Förderelement 8 festgelegt sind. Es können ferner Anschlagelemente vorgesehen sein, die die Bewegung des zweiten Förderelements 12 zum ersten Förderelement 8 hin begrenzen und dadurch die Breite des Spalts 18 präzise definieren. Die Anschlagelemente können beispielsweise als Distanzhülsen 40a, b gebildet sein, die auf den Führungsstiften 38a, b angeordnet sind. Es ist jedoch auch denkbar, dass die Breite B des Spalts 18 ohne Anschlagelemente präzise einstellbar ist, sodass auf solche verzichtet werden kann.

Zum Bewegen des zweiten Förderelements 12 sind hier zwei Stellantriebe 21a, b vorgesehen, die mit dem zweiten Förderelement 12 gekoppelt sind. Im dargestellten Ausführungsbeispiel sind die Stellantriebe 21a, b als pneumatische oder hydraulische Zylinder ausgebildet, deren Kolbenstangen mit dem zweiten Förderelement 12 verbunden sind. Die Stellantriebe 21a, b können das zweite Förderelement 12 folglich parallel zur Förderrichtung F bewegen. Es versteht sich, dass auch nur ein Führungsstift 38, mehr als zwei Führungsstifte 38a, b oder ähnliche Führungsmittel, sowie auch nur ein Stellantrieb 21 oder mehr als zwei Stellantriebe 21a, b vorgesehen werden können.

In Fig. 6a befinden sich das erste und das zweite Förderelement 8, 12 in einer ersten Stellung, in der die Breite des Spalts 18 der ersten Breite B1 entspricht, die gemäß dem vordefinierten Abscheidekriterium eingestellt ist. Durch die Distanzhülsen 40a, b kann die erste Breite B1 als minimale Breite des Spalts 18 festgelegt werden. Zur Anpassung der minimalen Breite des Spalts 18 in Abhängigkeit vom vordefinierten Abscheidekriterium können die Distanzhülsen 40a, b ausgewechselt werden.

In Fig. 6b befinden sich das erste und das zweite Förderelement 8, 12 in einer zweiten Stellung, in der der Spalt 18 eine zweite Breite B2 aufweist, die größer als die erste Breite B1 ist. Durch das Bewegen des zweiten Förderelements 12 relativ zum ersten Förderelement 8 aus der ersten in die zweite Stellung wird der Spalt 18 geöffnet. Dadurch können gegebenenfalls im Bereich des Spalts 18 verklemmte Produkte 32 gelöst und durch den Spalt 18 abgeschieden werden. Es ist zu erkennen, dass sich die Mehrzahl von Führungselementen 28 bevorzugt sowohl in der ersten Stellung als auch in der zweiten Stellung über den Spalt 18 bis auf das zweite Förderelement 12 erstrecken.

Die Stellantriebe 21a, b können das zweite Förderelement 12 in regelmäßigen zeitlichen Abständen aus der ersten in die zweite Stellung und wieder zurück bewegen, um eventuell auftretende Verklemmungen automatisch zu lösen. Dies stellt zwar eine sehr einfache und kostengünstig realisierbare Möglichkeit zum Lösen von Verklemmungen dar, bewirkt jedoch bei jedem Öffnen den Verlust von Produkten 32 durch den Spalt 18 und dadurch eine Verringerung der Ausbringung.

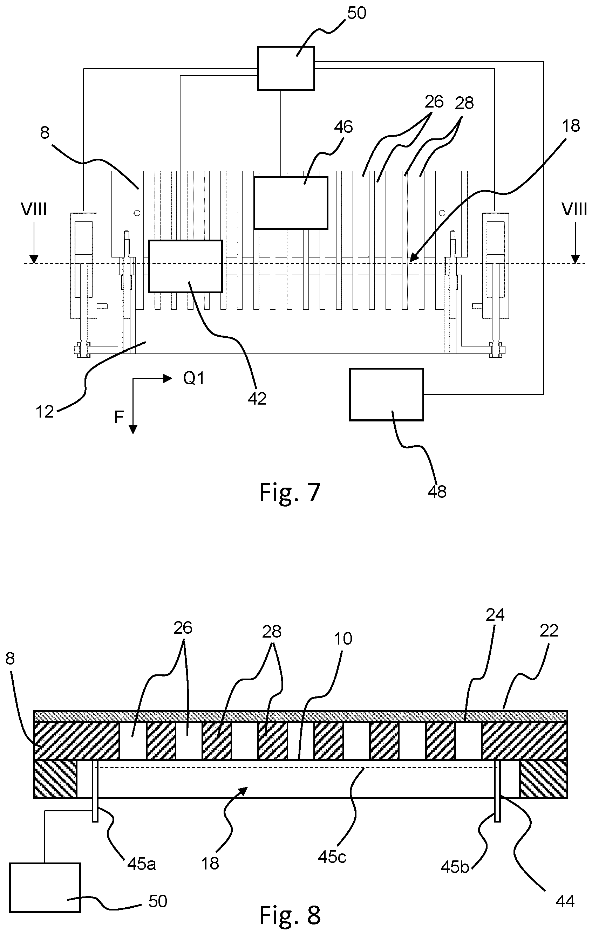

Bevorzugt erfolgt das Öffnen des Spalts 18 zur Beseitigung von Verklemmungen von Produkten 32 daher sensorgesteuert, sodass der Spalt 18 nur bei einer tatsächlich festgestellten Verklemmung geöffnet wird. Hierzu kann die Fördervorrichtung 2 zumindest einen Sensor zum Erkennen von Verklemmungen von Schüttgut im Spalt 18 umfassen. Verschiedene Ausführungsformen des zumindest einen Sensors 42, 44, 46, 48 sind nachfolgend unter Bezugnahme auf die Fig. 7 und Fig. 8 beschrieben. Die Sensoren 42, 46, 48 sind lediglich aus Gründen der einfacheren Darstellung gemeinsam in Fig. 7 dargestellt. Es versteht sich, dass auch nur zumindest ein Sensor gemäß einer dieser Ausführungsformen vorgesehen sein kann. Eine Kombination von Sensoren der verschiedenen Ausführungsformen ist jedoch ebenfalls denkbar.

Fig. 7 zeigt eine Draufsicht auf die Fördervorrichtung 2 im Bereich des Spalts 18 und Fig. 8 zeigt eine Schnittansicht der Fördervorrichtung 2 im Bereich des Spalts 18 entlang der Linie VIII-VIII in Fig. 7.

In Fig. 7 ist ein erster Sensor 42 gemäß einer ersten Ausführungsform dargestellt. Der erste Sensor 42 ist oberhalb des Spalts 18 angeordnet und erfasst Schüttgut, das im Spalt 18 verweilt. Das Abdeckelement 22 kann in diesem Fall transparent ausgebildet sein, um das Erfassen von Schüttgut im Bereich des Spalts 18 mittels des ersten Sensors 42 durch das Abdeckelement 22 hindurch zu ermöglichen. Erfasst der erste Sensor 42 nur einen Teil der Mehrzahl von Förderkanälen 26 im Bereich des Spalts 18, wie dargestellt, ist bevorzugt eine Mehrzahl von ersten Sensoren 42 in der ersten Querrichtung Q1 nebeneinander angeordnet, sodass alle Förderkanäle 26 im Bereich des Spalts 18 überwacht werden können. Der erste Sensor 42 erkennt nun ein Schüttgut, insbesondere eines der Produkte 32, im Bereich des Spalts 18 und erfasst einen Zeitraum, für den sich das erkannte Schüttgut im Bereich des Spalts 18 befindet. Ist der erfasste Zeitraum größer als ein vordefinierter Grenzwert, ist von einer Verklemmung auszugehen. Dies ist auch der Fall, wenn der erste Sensor 42 erkennt, dass sich ein Produkt 32 nicht weiter in Förderrichtung F bewegt.

In Fig. 8 ist ein zweiter Sensor 44 gemäß einer zweiten Ausführungsform dargestellt. Der zweite Sensor ist im Spalt 18 oder knapp unterhalb des Spalts 18 angeordnet. Der zweite Sensor 44 kann im Spalt 18 verweilendes Schüttgut oder den Durchtritt von Schüttgut durch den Spalt 18 erfassen. Im dargestellten Ausführungsbeispiel ist der zweite Sensor 44 als Lichtschranke ausgebildet, die einen Sender 45a und einen Empfänger 45b umfasst, zwischen denen ein gestrichelt angedeuteter Lichtstrahl 45c verläuft. Bewegt sich ein Produkt 32 über den Spalt 18 hinweg, unterbricht es den Lichtstrahl 45c nicht. Fällt Produktbruch 36 durch den Spalt 18, so unterbricht dieser den Lichtstrahl 45c nur kurz. Kippt ein Produkt 32 oder Produktbruch 36 in den Spalt 18 und verklemmt sich dort, wird der Lichtstrahl 45c länger oder dauerhaft unterbrochen, wodurch eine Verklemmung erkannt wird.

Ein dritter Sensor 46 gemäß einer dritten Ausführungsform ist wiederum in Fig. 7 zu sehen. Der dritte Sensor 46 ist stromaufwärts des Spalts 18 und idealerweise stromaufwärts des Abdeckelements 22 angeordnet und erfasst sich stauendes Schüttgut. Verklemmt sich ein Produkt 32 im Bereich des Spalts 18 in einem der Förderkanäle 26, blockiert es nachfolgendes Schüttgut, sodass sich dieses staut. Der dritte Sensor 46 erkennt einen solchen Stau, wodurch eine Verklemmung erkannt wird. Wie zum ersten Sensor 42 beschrieben, kann der dritte Sensor nur einen Teil der Mehrzahl von Förderkanälen 26 oder alle Förderkanäle 26 erfassen.

Schließlich ist in Fig. 7 noch ein vierter Sensor 48 gemäß einer vierten Ausführungsform dargestellt. Der vierte Sensor 48 ist bezüglich der Förderrichtung F stromabwärts des Spalts 18 angeordnet und kann beispielsweise der Bearbeitungsstation 4 zugeordnet sein. Der vierte Sensor 48 erfasst eine sinkende Ausbringung der Fördervorrichtung 2. Sinkt die Ausbringung der Fördervorrichtung 2 unter einen vorbestimmten Grenzwert, ist von einer Blockierung zumindest eines Förderkanals 26 durch ein verklemmtes Produkt 32 auszugehen, sodass eine Verklemmung erkannt wird.

Die Fördervorrichtung 2 umfasst vorzugsweise eine Steuereinrichtung 50 zum Steuern des zumindest einen Stellantriebs 21. Die Steuereinrichtung 50 kann auch die Antriebseinrichtung 16 der Fördervorrichtung 2 steuern. Bevorzugt ist die Steuereinrichtung 50 kommunizierend mit dem zumindest einen Sensor verbunden, wie in Fig. 7 und 8 durch die Verbindung des ersten Sensors 42, des zweiten Sensors 44, des dritten Sensors 46 und des vierten Sensors 48 mit der Steuereinrichtung 50 angedeutet. Der zumindest eine Sensor 42, 44, 46, 48 stellt Signal bereit, das an die Steuereinrichtung 50 übermittelt wird, die in Reaktion auf das Signal den zumindest einen Stellantrieb 21 derart ansteuert, dass das erste und das zweite Förderelement 8, 12 aus der ersten Stellung in die zweite Stellung bewegt werden. Dadurch wird die Verklemmung gelöst und das erste und das zweite Förderelement 8, 12 können zurück in die erste Stellung bewegt werden.

Eine Ausführungsform der erfindungsgemäßen Blistermaschine 52 mit einer Fördervorrichtung 2 ist schließlich schematisch in Fig. 9 dargestellt. In der Blistermaschine 52 wird eine bahnförmige Formfolie 54 vorzugsweise auf einer ersten Vorratsrolle 56 bereitgestellt. Die Formfolie 54 wird zunächst einer Formstation 58 zugeführt, die Näpfe zur Aufnahme von Produkten 32 in die Formfolie 54 formt. Anschließend wird die Formfolie 54 der Füllstation 4 zugeführt, in der Produkte 32 in die Näpfe der Formfolie 54 gefüllt werden. Dazu werden die Produkte 32 in Form von Schüttgut, das auch Produktbruch 36 enthält, im Produktspeicher 6 bereitgestellt. Der Produktspeicher 6 dient zur Aufnahme des Schüttguts und gibt das Schüttgut an die Fördervorrichtung 2 ab. Die Fördervorrichtung 2 fördert das Schüttgut in Förderrichtung F, wobei Produktbruch 36 abgeschieden wird, wie oben beschrieben. Lediglich Produkte 32 vorbestimmter Qualität werden von der Fördervorrichtung 2 zur Füllstation 4 gefördert.

Eine bahnförmige Deckfolie 60 wird in der Blistermaschine 52 vorzugsweise auf einer zweiten Vorratsrolle 62 bereitgestellt. Die Deckfolie 60 wird der mit Produkten 32 gefüllten Formfolie 54 zugeführt und in einer Siegelstation 64 zum Verschließen der Näpfe der Formfolie 54 an die Formfolie 54 gesiegelt. In einer Stanzstation 66 werden dann einzelne Blisterpackungen aus dem Folienverbund aus Formfolie 54 und Deckfolie 60 gestanzt.

## Patentansprüche

1. Blistermaschine (52) mit:
einem Produktspeicher (6) zur Aufnahme von Schüttgut umfassend eine Vielzahl von Produkten (32) und Produktbruch (36) derselben,
einer Fördervorrichtung (2) zum Fördern des Schüttguts in einer Förderrichtung (F) und zum Abscheiden von Produktbruch (36), und
einer Füllstation (4) zum Füllen der Produkte (32) in Näpfe, wobei der Produktspeicher (6) zur Abgabe des Schüttguts an die Fördervorrichtung (2) eingerichtet ist und die Fördervorrichtung (2) zum Fördern der Produkte (32) zur Füllstation (4) eingerichtet ist,
wobei die Fördervorrichtung (2) umfasst:
ein erstes Förderelement (8) mit einer ersten Förderfläche (10), auf der das Schüttgut in Förderrichtung (F) förderbar ist;
ein zweites Förderelement (12) mit einer zweiten Förderfläche (14), auf der das Schüttgut weiter in Förderrichtung (F) förderbar ist, wobei das zweite Förderelement (12) dem ersten Förderelement (8) in Förderrichtung (F) nachgeschaltet ist; und
ein Abdeckelement (22) mit einer Abdeckfläche (24), die im Wesentlichen parallel zur ersten Förderfläche (10) und zur zweiten Förderfläche (14) angeordnet und diesen zugewandt ist, um zumindest einen Förderkanal (26) für das Schüttgut zwischen der ersten Förderfläche (10), der zweiten Förderfläche (14) und der Abdeckfläche (24) zu bilden;
wobei das erste und das zweite Förderelement (8, 12) in Förderrichtung (F) beabstandet zueinander angeordnet sind, sodass ein Spalt (18) zwischen dem ersten und dem zweiten Förderelement (8, 12) ausgebildet ist, wobei das Abdeckelement (22) über dem Spalt (18) sowie über jeweils einem Abschnitt des ersten und des zweiten Förderelements (8, 12) angeordnet ist, die an den Spalt (18) angrenzen;
wobei der Spalt (18) in einer ersten Stellung des ersten und des zweiten Förderelements (8, 12) in Förderrichtung (F) eine erste Breite (B1) gemäß einem vordefinierten Abscheidekriterium aufweist derart, dass der Durchtritt von Produktbruch (36) durch den Spalt (18) ermöglicht ist und der Durchtritt von Produkten (32) durch den Spalt (18) unterbunden ist.

2. Blistermaschine (52) nach Anspruch 1, **dadurch gekennzeichnet, dass** das erste und/oder das zweite Förderelement (8, 12) in Förderrichtung (F) relativ zueinander bewegbar sind und die Breite (B) des Spalts (18) einstellbar ist.

3. Blistermaschine (52) nach Anspruch 2, **dadurch gekennzeichnet, dass** das erste und/oder das zweite Förderelement (8, 12) in Förderrichtung (F) zwischen der ersten Stellung und einer zweiten Stellung bewegbar sind, wobei der Spalt (18) in der zweiten Stellung eine zweite Breite (B2) aufweist, die größer als die erste Breite (B1) ist.

4. Blistermaschine (52) nach einem der Ansprüche 1 bis 3, **dadurch gekennzeichnet, dass** die Fördervorrichtung (2) weiterhin eine Mehrzahl von Führungselementen (28) umfasst, die sich in Förderrichtung (F) über den Spalt (18) erstrecken, in einer Richtung (Q1) quer zur Förderrichtung (F) nebeneinander angeordnet sind, und eine Mehrzahl von Förderkanälen (26) für das Schüttgut quer zur Förderrichtung (F) seitlich begrenzen, wobei das Abdeckelement (22) die Mehrzahl von Förderkanälen (26) nach oben begrenzt und die erste und die zweite Förderfläche (10, 14) die Mehrzahl von Förderkanälen (26) in einem Abschnitt (8a, 12a) des ersten und des zweiten Förderelements (8, 12), die an den Spalt (18) angrenzen, nach unten begrenzen.

5. Blistermaschine (52) nach Anspruch 4, **dadurch gekennzeichnet, dass** die Mehrzahl von Führungselementen (28) auf dem ersten Förderelement (8) angebracht ist und in Förderrichtung (F) über das erste Förderelement (8) hinausragt, sodass sich die Mehrzahl von Führungselementen (28) über den Spalt (18) und vorzugsweise zumindest teilweise über das zweite Förderelement (12) erstreckt.

6. Blistermaschine (52) nach Anspruch 4 oder 5, **dadurch gekennzeichnet, dass** ein Abstand zweier benachbarter Führungselemente (28) der Mehrzahl von Führungselementen (28) eine Breite (BF) der Mehrzahl von Förderkanälen (26) definiert und ein Abstand der Abdeckfläche (24) von der ersten und der zweiten Förderfläche (10, 14) eine Höhe (H) der Mehrzahl von Förderkanälen (26) definiert, wobei die Mehrzahl von Förderkanälen (26) eine Breite (BF) und eine Höhe (H) aufweisen derart, dass die Produkte (32) eine vordefinierte Ausrichtung bezüglich der Förderrichtung (F) aufweisen und zumindest im Bereich der Mehrzahl von Führungselementen (28) beibehalten,
wobei eine erste Dimension (L1) der Produkte (32) in der vordefinierten Ausrichtung parallel zur Förderrichtung (F) definiert ist, wobei das Abscheidekriterium in Abhängigkeit von der ersten Dimension (L1) definiert ist.

7. Blistermaschine (52) nach einem der vorangehenden Ansprüche, **dadurch gekennzeichnet, dass** die Fördervorrichtung (2) zumindest einen Sensor (42, 44, 46, 48) zum Erkennen von Verklemmungen von Schüttgut im Spalt (18) umfasst.

8. Blistermaschine (52) nach Anspruch 7, **dadurch gekennzeichnet, dass** der zumindest eine Sensor (42) oberhalb des Spalts (18), vorzugsweise oberhalb des Abdeckelements (22), angeordnet ist und dazu eingerichtet ist, im Spalt (18) verweilendes Schüttgut zu erfassen, oder
der zumindest eine Sensor (44) in dem Spalt (18) oder unterhalb des Spalts (18), vorzugsweise unterhalb des ersten und/oder des zweiten Förderelements (8, 12), angeordnet ist und dazu eingerichtet ist, im Spalt (18) verweilendes Schüttgut zu erfassen, oder
der zumindest eine Sensor (46) bezüglich der Förderrichtung (F) stromaufwärts des Spalts (18), vorzugsweise stromaufwärts des Abdeckelements (22), angeordnet ist und dazu eingerichtet ist, sich stauendes Schüttgut zu erfassen, oder
der zumindest eine Sensor (48) bezüglich der Förderrichtung (F) stromabwärts des Spalts (18) angeordnet ist, vorzugsweise einer der Fördervorrichtung (2) nachfolgenden Bearbeitungsstation (4) zugeordnet ist, und dazu eingerichtet ist, eine sinkende Ausbringung der Fördervorrichtung (2) zu erfassen.

9. Verfahren zum Fördern und Sortieren von Schüttgut umfassend eine Vielzahl von Produkten (32) und Produktbruch (36) derselben, ausgeführt mittels einer Blistermaschine nach einem der vorangehenden Ansprüche, wobei das Verfahren die folgenden Schritte umfasst:
Fördern des Schüttguts auf der ersten Förderfläche (10) in Förderrichtung (F) zum Spalt (18), der in Förderrichtung (F) die erste Breite (B1) gemäß dem vordefinierten Abscheidekriterium aufweist derart, dass Produktbruch (36) durch den Spalt (18) hindurch tritt und der Durchtritt von Produkten (32) durch den Spalt (18) unterbunden ist;
Bewegen der Produkte (32) in Förderrichtung (F) über den Spalt (18) hinweg auf die zweite Förderfläche (14) und Abscheiden von Produktbruch (36) durch den Spalt (18) hindurch; und
Fördern der Produkte (32) auf der zweiten Förderfläche (14) weiter in Förderrichtung (F).

10. Verfahren nach Anspruch 9, **dadurch gekennzeichnet, dass** das Fördern des Schüttguts zum Spalt (18) umfasst:
Ausrichten der Produkte (32) des Schüttguts mittels einer Ausrichteinrichtung (30), sodass die Produkte (32) eine vordefinierte Ausrichtung bezüglich der Förderrichtung (F) aufweisen, wobei eine erste Dimension (L1) der Produkte in der vordefinierten Ausrichtung parallel zur Förderrichtung (F) definiert ist, wobei das Abscheidekriterium in Abhängigkeit von der ersten Dimension (L1) definiert ist; und
Führen der Produkte (32) des Schüttguts zum Spalt (18) derart, dass die Produkte (32) die vordefinierte Ausrichtung beibehalten;
wobei das Bewegen der Produkte (32) über den Spalt (18) hinweg das Führen der Produkte (32) über den Spalt (18) umfasst derart, dass die Produkte (32) die vordefinierte Ausrichtung im Wesentlichen beibehalten.

11. Verfahren nach Anspruch 9 oder 10, **dadurch gekennzeichnet, dass** das Verfahren vor dem Fördern des Schüttguts zum Spalt (18) umfasst:
Einstellen der ersten Breite (B1) des Spalts (18) gemäß dem vordefinierten Abscheidekriterium.

12. Verfahren nach einem der Ansprüche 9 bis 11, **dadurch gekennzeichnet, dass** das Verfahren weiterhin umfasst:
Öffnen des Spalts (18) von der ersten Breite (B1) auf eine zweite Breite (B2), die größer als die erste Breite (B1) ist, mittels eines Stellantriebs (21).

13. Verfahren nach Anspruch 12, **dadurch gekennzeichnet, dass** das Verfahren weiterhin umfasst:
Erkennen einer Verklemmung eines Produkts (32) oder Produktbruchs (36) des Schüttguts im Spalt (18) mittels zumindest eines Sensors (42, 44, 46, 48);
Bereitstellen eines die Verklemmung kennzeichnenden Signals mittels des zumindest einen Sensors (42, 44, 46, 48), wenn die Verklemmung erkannt wird; und
Öffnen des Spalts (18) auf die zweite Breite (B2) in Reaktion auf das Signal, um die Verklemmung zu lösen.

14. Verfahren nach Anspruch 13, **dadurch gekennzeichnet, dass** das Erkennen einer Verklemmung eines Produkts (32) oder Produktbruchs (36) im Spalt (18) umfasst:
Erfassen eines Zeitraums, für den sich die Produkte (32) bzw. der Produktbruch (36) des Schüttguts im Bereich des Spalts (18) befinden, Vergleichen des erfassten Zeitraums mit einem vordefinierten Grenzwert, und Feststellen einer Verklemmung, wenn der erfasste Zeitraum größer als der vordefinierte Grenzwert ist; oder
Erfassen von im Bereich des Spalts (18) verweilendem Schüttgut oder des Durchtritts von Schüttgut, insbesondere von Produktbruch (36), durch den Spalt (18) und Feststellen einer Verklemmung, wenn ein im Spalt (18) verweilendes Schüttgut bzw. kein Durchtritt erfasst wird; oder
Erfassen des Schüttguts stromaufwärts des Spalts (18), Erkennen von sich stauendem Schüttgut stromaufwärts des Spalts (18), und Feststellen einer Verklemmung, wenn sich stauendes Schüttgut erkannt wird; oder
Erfassen der Vielzahl von Produkten (32) des Schüttguts stromabwärts des Spalts (18), Erkennen einer sinkenden Ausbringung der Produkte (32) des Schüttguts stromabwärts des Spalts (18), und Feststellen einer Verklemmung, wenn eine sinkende Ausbringung erkannt wird.

## Claims

1. A blister machine (52), comprising:
a product storage (6) for receiving bulk material, comprising a plurality of products (32) and broken products (36) thereof,
a conveying device (2) for conveying the bulk material in a conveying direction (F) and for separating out broken products (36), and
a filling station (4) for filling the products (32) into bowls, wherein the product storage (6) is set up to dispense the bulk material to the conveying device (2), and the conveying device (2) is set up to convey the products (32) to the filling station (4),
wherein the conveying device (2) comprises:
a first conveying element (8) with a first conveying surface (10), on which the bulk material can be conveyed in the conveying direction (F);
a second conveying element (12) with a second conveying surface (14), on which the bulk material can be further conveyed in the conveying direction (F), wherein the second conveying element (12) is downstream from the first conveying element (8) in the conveying direction (F); and
a covering element (22) with a covering surface (24), which is arranged essentially parallel to the first conveying surface (10) and to the second conveying surface (14), and faces the latter, so as to form at least one conveying channel (26) for the bulk material between the first conveying surface (10), the second conveying surface (14) and the covering surface (24);
wherein the first and the second conveying elements (8, 12) are arranged spaced apart from each other in the conveying direction (F), so that a gap (18) is formed between the first and the second conveying element (8, 12), wherein the covering element (22) is arranged over the gap (18) as well as over a respective section of the first and the second conveying elements (8, 12), which border the gap (18);
wherein the gap (18), in a first position of the first and the second conveying element (8, 12), has a first width (B1) in the conveying direction (F) according to a predefined separating criterion, so as to allow broken product (36) to pass through the gap (18) and prevent products (32) from passing through the gap (18).

2. The blister machine (52) according to claim 1, **characterized in that** the first and/or the second conveying element (8, 12) can be moved relative to each other in the conveying direction (F), and the width (B) of the gap (18) is adjustable.

3. The blister machine (52) according to claim 2, **characterized in that** the first and/or the second conveying element (8, 12) can be moved between the first position and a second position in the conveying direction (F), wherein the gap (18) has a width (B2) in the second position that is larger than the first width (B1).

4. The blister machine (52) according to one of claims 1 to 3, **characterized in that** the conveying device (2) further comprises a plurality of guiding elements (28), which extend over the gap (18) in the conveying direction (F), are arranged next to each other in a direction (Q1) transverse to the conveying direction (F), and laterally border a plurality of conveying channels (26) for the bulk material transverse to the conveying direction (F), wherein the covering element (22) upwardly borders the plurality of conveying channels (26), and the first and the second conveying surface (10, 14) downwardly border the plurality of conveying channels (26) in a section (8a, 12a) of the first and the second conveying element (8, 12), which border the gap (18).

5. The blister machine (52) according to claim 4, **characterized in that** the plurality of guiding elements (28) is secured to the first conveying element (8) and protrudes over the first conveying element (8) in the conveying direction (F), so that the plurality of guiding elements (28) extends over the gap (18) and preferably at least partially over the second conveying element (12).

6. The blister machine (52) according to claim 4 or 5, **characterized in that** a distance between two adjacent guiding elements (28) of the plurality of guiding elements (28) defines a width (BF) of the plurality of conveying channels (26), and a distance between the covering surface (24) and the first and the second conveying surface (10, 14) defines a height (H) of the plurality of conveying channels (26), wherein the plurality of conveying channels (26) has a width (BF) and a height (H), such that the products (32) have a predefined alignment in relation to the conveying direction (F), and retain it in at least the area of the plurality of guiding elements (28),
wherein a first dimension (L1) of the products (32) is defined parallel to the conveying direction (F) in the predefined alignment, wherein the separation criterion is defined as a function of the first dimension (L1).

7. The blister machine (52) according to one of the preceding claims, **characterized in that** the conveying device (2) comprises at least one sensor (42, 44, 46, 48) for detecting blockages of bulk material in the gap (18).

8. The blister machine (52) according to claim 7, **characterized in that** the at least one sensor (42) is arranged above the gap (18), preferably above the covering element (22), and set up to measure bulk material retained in the gap (18), or
the at least one sensor (44) is arranged in the gap (18) or below the gap (18), preferably below the first and/or the second conveying element (8, 12), and set up to measure bulk material retained in the gap (18), or
the at least one sensor (46) is arranged upstream from the gap (18), preferably upstream from the covering element (22), in relation to the conveying direction (F), and set up to measure accumulating bulk material, or
the at least one sensor (48) is arranged downstream from the gap (18) in relation to the conveying direction (F), preferably allocated to a processing station (4) that follows the conveying device (2), and set up to measure a declining output of the conveying device (2).

9. A method for conveying and sorting bulk material comprising a plurality of products (32) and broken products (36) of the latter, implemented by means of a blister machine according to one of the preceding claims, wherein the method comprises the following steps:
conveying the bulk material on the first conveying surface (10) in the conveying direction (F) to the gap (18), which in the conveying direction (F) has the first width (B1) according to the predefined separation criterion, such that broken product (36) passes through the gap (18), and the passage of products (32) through the gap (18) is prevented;
moving the products (32) in the conveying direction (F) over the gap (18) on the second conveying surface (14), and separating out broken product (36) through the gap (18); and
conveying the products (32) further in the conveying direction (F) on the second conveying surface (14).

10. The method according to claim 9, **characterized in that** conveying the bulk material to the gap (18) involves:
aligning the products (32) of the bulk material by means of an alignment device (30), so that the products (32) have a predefined alignment in relation to the conveying direction (F), wherein a first dimension (L1) of the products is defined parallel to the conveying direction (F) in the predefined alignment, wherein the separation criterion is defined as a function of the first dimension (L1); and
guiding the products (32) of the bulk material to the gap (18), such that the products (32) retain the predefined alignment;
wherein moving the products (32) over the gap (18) involves guiding the products (32) over the gap (18), such that the products (32) essentially retain the predefined alignment.

11. The method according to claim 9 or 10, **characterized in that** the method involves the following prior to conveying the bulk material to the gap (18):
setting the width (B1) of the gap (18) according to the predefined separation criterion.

12. The method according to one of claims 9 to 11, **characterized in that** the method further involves:
opening the gap (18) from the first width (B1) to a second width (B2), which is larger than the first width (B1), by means of an actuator (21).

13. The method according to claim 12, **characterized in that** the method further involves:
detecting a blockage of a product (32) or broken product (36) of the bulk material in the gap (18) by means of at least one sensor (42, 44, 46, 48);
providing a signal characterizing the blockage by means of the at least one sensor (42, 44, 46, 48) once the blockage has been detected; and
opening the gap (18) to the second width (B2) in response to the signal, so as to release the blockage.

14. The method according to claim 13, **characterized in that** detecting a blockage of a product (32) or broken product (36) in the gap (18) involves:
measuring a period for which the products (32) or the broken product (36) of the bulk material are located in the area of the gap (18), comparing the measured period with a predefined limit value, and determining a blockage if the measured period exceeds the predefined limit value; or
measuring bulk material retained in the area of the gap (18) or the passage of bulk material, in particular of broken product (36), through the gap (18), and determining a blockage if bulk material retained in the gap (18) or no passage is detected; or
measuring the bulk material upstream from the gap (18), detecting accumulating bulk material upstream from the gap (18), and determining a blockage if accumulating bulk material is clearly identified; or
measuring the plurality of products (32) of the bulk material downstream from the gap (18), detecting a declining output of products (32) of the bulk material downstream from the gap (18), and determining a blockage if a declining output is detected.

## Revendications

1. Machine d'emballage sous blister (52) comportant :
un accumulateur de produits (6), destiné à recevoir des produits en vrac, comportant une pluralité de produits (32) et de fragments de produits (36) de ces derniers,
un dispositif d'acheminement (2), destiné à acheminer les produits en vrac dans une direction d'acheminement (F) et à séparer les fragments de produits (36) et
un poste de chargement (4), destiné à charger les produits (32) dans des alvéoles, l'accumulateur de produits (6) étant configuré pour restituer les produits en vrac au dispositif d'acheminement (2) et le dispositif d'acheminement (2) étant constitué pour acheminer les produits (32) vers le poste de remplissage (4),
le dispositif d'acheminement (2) comprenant :
un premier élément d'acheminement (8), doté d'une première surface d'acheminement (10), sur laquelle les produits en vrac peuvent être acheminés dans la direction d'acheminement (F) ;
un deuxième élément d'acheminement (12), doté d'une deuxième surface d'acheminement (14), sur laquelle les produits en vrac peuvent être acheminés plus loin dans la direction d'acheminement (F), le deuxième élément d'acheminement (12) étant placé en aval du premier élément d'acheminement (8) dans la direction d'acheminement (F) ; et
un élément de recouvrement (22), doté d'une surface de recouvrement (24), qui est placée sensiblement à la parallèle de la première surface d'acheminement (10) et de la deuxième surface d'acheminement (14) et qui fait face à ces dernières, pour constituer au moins un conduit d'acheminement (26) pour les produits en vrac entre la première surface d'acheminement (10), la deuxième surface d'acheminement (14) et la surface de recouvrement (24) ;
le premier et le deuxième éléments d'acheminement (8, 12) étant placés avec un écart mutuel dans la direction d'acheminement (F), de telle sorte qu'une fente (18) soit conçue entre le premier et le deuxième élément d'acheminement (8, 12), l'élément de recouvrement (22) étant placé au-dessus de la fente (18) ainsi qu'au-dessus de chaque fois un segment du premier et du deuxième éléments d'acheminement (8, 12) qui sont adjacents à la fente (18) ;
dans une première position du premier et du deuxième éléments d'acheminement (8, 12) conforme à un critère de séparation prédéfini, la fente (18) présentant une première largeur (B1) conforme à un critère de séparation prédéfini, de sorte à permettre le passage de fragments de produits (36) à travers la fente (18) et à empêcher le passage de produits (32) à travers la fente (18).

2. Machine d'emballage sous blister (52) selon la revendication 1, **caractérisée en ce que** le premier et / ou le deuxième élément d'acheminement (8, 12) sont déplaçables les uns par rapport aux autres dans la direction d'acheminement (F) et **en ce que** la largeur (B) de la fente (18) est réglable.

3. Machine d'emballage sous blister (52) selon la revendication 2, **caractérisée en ce que** le premier et / ou le deuxième éléments d'acheminement (8, 12) sont déplaçables dans la direction d'acheminement (F) entre la première position et une deuxième position, dans la deuxième position, la fente (18) présentant une deuxième largeur (B2), qui est supérieure à la première largeur (B1).

4. Machine d'emballage sous blister (52) selon l'une quelconque des revendications 1 à 3, **caractérisée en ce que** le dispositif d'acheminement (2) comprend par ailleurs une pluralité d'éléments de guidage (28), qui dans la direction d'acheminement (F) s'étendent au-dessus de la fente (18), sont placés côte à côte dans une direction (Q1) transversale à la direction d'acheminement (F) et délimitent latéralement une pluralité de conduits d'acheminement (26) pour les produits en vrac, à la transversale de la direction d'acheminement (F), l'élément de recouvrement (22) délimitant vers le haut la pluralité de conduits d'acheminement (26) et la première et la deuxième surfaces d'acheminement (10, 14) délimitant vers le bas la pluralité de conduits d'acheminement (26) dans un segment (8a, 12a) du premier et du deuxième éléments d'acheminement (8, 12) qui sont adjacents à la fente (18).

5. Machine d'emballage sous blister (52) selon la revendication 4, **caractérisée en ce que** la pluralité d'éléments de guidage (28) est montée sur le premier élément d'acheminement (8) et dans la direction d'acheminement (F), saillit au-delà du premier élément d'acheminement (8), de telle sorte que la pluralité d'éléments de guidage (28) s'étende au-dessus de la fente (18) et de préférence au moins en partie au-dessus du deuxième élément d'acheminement (12).

6. Machine d'emballage sous blister (52) selon la revendication 4 ou 5, **caractérisée en ce qu'**un écart entre deux éléments de guidage (28) voisins de la pluralité d'éléments de guidage (28) définit une largeur (BF) de la pluralité de conduits d'acheminement (26) et un écart entre la surface de recouvrement (24) et la première et la deuxième surfaces d'acheminement (10, 14) définit une hauteur (H) de la pluralité de conduits d'acheminement (26), la pluralité de conduits d'acheminement (26) présentant une largeur (BF) et une hauteur (H), de manière à ce que les produits (32) présentent une orientation prédéfinie en rapport à la direction d'acheminement (F) et la gardent au moins dans la zone de la pluralité d'éléments de guidage (28),
une première dimension (L1) des produits (32) dans l'orientation prédéfinie étant définie à la parallèle de la direction d'acheminement (F), le critère de séparation étant défini en fonction de la première dimension (L1).

7. Machine d'emballage sous blister (52) selon l'une quelconque des revendications précédentes, **caractérisée en ce que** le dispositif d'acheminement (2) comprend au moins un capteur (42, 44, 46, 48), destiné à identifier des blocages de produits en vrac dans la fente (18).

8. Machine d'emballage sous blister (52) selon la revendication 7, **caractérisée en ce que** l'au moins un capteur (42) est placé au-dessus de la fente (18), de préférence au-dessus de l'élément de recouvrement (22) et est configuré pour détecter des produits en vrac séjournant dans la fente (18) ou
**en ce que** l'au moins un capteur (44) est placé dans la fente (18) ou en-dessous de la fente (18), de préférence, en-dessous du premier et / ou du deuxième éléments d'acheminement (8, 12) et est configuré pour détecter des produits en vrac séjournant dans la fente (18) ou
**en ce qu'**en rapport à la direction d'acheminement (F), l'au moins un capteur (46) est placé en amont de la fente (18), de préférence en amont de l'élément de recouvrement (22) et est configuré pour détecter des produits en vrac qui s'engorgent ou
**en ce qu'**en rapport de la direction d'acheminement (F), au moins un capteur (48) est placé en aval de la fente (18), est associé de préférence à un poste d'usinage (4) suivant le dispositif d'acheminement (2) et est configuré pour détecter une distribution en baisse du dispositif d'acheminement (2).

9. Procédé, destiné à acheminer et à trier des produits en vrac comprenant une pluralité de produits (32) et des fragments de produits (36) de ces derniers, effectué au moyen d'une machine d'emballage sous blister selon l'une quelconque des revendications précédentes, le procédé comprenant les étapes suivantes, consistant à :
acheminer les produits en vrac sur la première surface d'acheminement (10) dans la direction d'acheminement (F) vers la fente (18), qui dans la direction d'acheminement (F) présente la première largeur (B1) conforme au critère de séparation prédéfini, de telle sorte que des fragments de produits (36) passent à travers la fente (18) et que le passage de produits (32) à travers la fente (18) soit empêché ;
déplacer les produits (32) dans la direction d'acheminement (F) au-dessus de la fente (18) sur la deuxième surface de convoyage (14) et séparer des fragments de produits (36) à travers la fente (18) ; et
acheminer les produits (32) sur la deuxième surface d'acheminement (14), plus loin dans la direction d'acheminement (F).

10. Procédé selon la revendication 9, **caractérisé en ce que** l'acheminement des produits en vrac vers la fente (18) comprend :
l'orientation des produits (32) inhérents aux produits en vrac au moyen d'un dispositif d'orientation (30), de telle sorte que les produits (32) présentent une orientation prédéfinie en rapport de la direction d'acheminement (F), une première dimension (L1) des produits dans l'orientation prédéfinie étant définie à la parallèle de la direction d'acheminement (F), le critère de séparation étant défini en fonction de la première dimension (L1) ; et
le guidage des produits (32) inhérents aux produits en vrac vers la fente (18), de telle sorte que les produits (32) gardent l'orientation prédéfinie ;
le déplacement des produits (32) au-delà de la fente (18) comprenant le guidage des produits (32) au-dessus de la fente (18), de telle sorte que les produits (32) gardent sensiblement l'orientation prédéfinie.

11. Procédé selon la revendication 9 ou 10, **caractérisé en ce qu'**avant l'acheminement des produits en vrac vers la fente (18), le procédé comprend :
le réglage de la première largeur (B1) de la fente (18) conformément au critère de séparation prédéfini.

12. Procédé selon l'une quelconque des revendications 9 à 11, **caractérisé en ce que** le procédé comprend par ailleurs :
l'ouverture de la fente (18) de la première largeur (B1) à une deuxième largeur (B2), qui est supérieure à la première largeur (B1), au moyen d'un actionneur (21).

13. Procédé selon la revendication 12, **caractérisé en ce que** le procédé comprend par ailleurs :
l'identification d'un blocage d'un produit (32) ou d'un fragment de produit (36) des produits en vrac dans la fente (18) au moyen d'au moins un capteur (42, 44, 46, 48) ;
la mise à disposition d'un signal caractérisant le blocage au moyen de l'au moins un capteur (42, 44, 46, 48), lorsque le blocage est identifié ; et
l'ouverture de la fente (18) à la deuxième largeur (B2), en réaction au signal, pour remédier au blocage.

14. Procédé selon la revendication 13, **caractérisé en ce que** l'identification d'un blocage d'un produit (32) ou d'un fragment de produit (36) dans la fente (18) comprend :
la détection d'une période, pendant laquelle les produits (32) ou les fragments de produits (36) des produits en vrac se trouvent dans la zone de la fente (18), la comparaison de la période détectée avec une valeur limite prédéfinie et la constatation d'un blocage si la période détectée est supérieure à la valeur limite prédéfinie ; ou
la détection de produits en vrac séjournant la zone de la fente (18) ou du passage de produits en vrac, notamment de fragments de produits (36) à travers la fente (18) et la constatation d'un blocage si un produit en vrac séjournant dans la fente (18) ou l'absence d'un passage est détecté ; ou
la détection du produit en vrac en amont de la fente (18), l'identification d'un engorgement de produits en vrac en amont de la fente (18) et la constatation d'un blocage si un engorgement de produits en vrac est identifié ; ou
la détection de la pluralité de produits (32) inhérents aux produits en vrac en aval de la fente (18), la détection d'une distribution en baisse des produits (32) inhérents aux produits en vrac en aval de la fente (18) et la constatation d'un blocage si une distribution en baisse est identifiée.
